# EUROPEAN PATENT APPLICATION

(11) **EP 4 538 885 A1**
(43) Date of publication of application: **16.04.2025**
(21) Application number: 24206039.0
(22) Date of filing: 11.10.2024
(51) Int. Cl.: G06F 9/50, G06N 20/00

(54) **METHODS AND SYSTEMS THAT MANAGE CLOUD-COMPUTING INFRASTRUCTURE USING ARTIFICIAL-LIFE AGENTS**

(30) Priority: 13.10.2023 US 202318379821
(71) Applicant: VMware LLC, Palo Alto, CA 94304 (US)
(72) Inventor: de Buitléir, Amy, Co. Cork, P31 PF68 (IE)
(74) Representative: Dilg, Haeusler, Schindelmann Patentanwaltsgesellschaft mbH

(57) **Abstract**

The current document is directed to distributed-computer-systems and, in particular, to management of distributed applications and cloud infrastructure using artificial-life agents. The artificial-life agents are organized into a population, the size of which is stabilized as individual artificial-life agents predict system-control parameters, receive rewards based on the predictions, thrive and propagate as they learn to provide better predictions while adapting to a constantly changing environment, and expire when they fail to provide useful predictions over periods of time. The predictions output by individual artificial-life agents are used to provide consensus predictions by the artificial-life-agent population to a cloud-infrastructure-management or distributed-application-management controller.

## Description

### TECHNICAL FIELD

The current document is directed to distributed-computer-systems and, in particular, to management of distributed applications and cloud-infrastructure using artificial-life agents.

### BACKGROUND

During the past seven decades, electronic computing has evolved from primitive, vacuum-tube-based computer systems, initially developed during the 1940s, to modem electronic computing systems, including distributed cloud-computing systems, in which large numbers of multiprocessor servers, work stations, and other individual computing systems are networked together with large-capacity data-storage devices and other electronic devices to produce geographically distributed computing systems with hundreds of thousands, millions, or more components that provide enormous computational bandwidths and data-storage capacities. These large, distributed computing systems are made possible by advances in computer networking, distributed operating systems and applications, data-storage appliances, computer hardware, and software technologies. The advent of distributed computer systems has provided a computational platform for increasingly complex distributed applications, including distributed service-oriented applications. Distributed applications, including distributed service-oriented applications and distributed microservices-based applications, provide many advantages, including efficient scaling to respond to changes in workload, efficient functionality compartmentalization that, in turn, provides development and management efficiencies, flexible response to system component failures, straightforward incorporation of existing functionalities, and straightforward expansion of functionalities and interfaces with minimal interdependencies between different types of distributed-application instances. As new distributed-computing technologies are developed, and as general hardware and software technologies continue to advance, the current trend towards ever-larger and more complex distributed computing systems appears likely to continue well into the future.

As the complexity of distributed computing systems has increased, the management and administration of distributed computing systems and applications have, in turn, become increasingly complex, involving greater computational overheads and significant inefficiencies and deficiencies. In fact, many desired management-and-administration functionalities are becoming sufficiently complex to render traditional approaches to the design and implementation of automated and semi-automated management and administration subsystems impractical, from a time and cost standpoint. Therefore, designers and developers of distributed computer systems and applications continue to seek new approaches to implementing automated and semi-automated management-and-administration facilities and functionalities.

### SUMMARY

The current document is directed to distributed-computer-systems and, in particular, to management of distributed applications and cloud infrastructure using artificial-life agents. The artificial-life agents are organized into a population, the size of which is stabilized as individual artificial-life agents predict system-control parameters, receive rewards based on the predictions, thrive and propagate as they learn to provide better predictions while adapting to a constantly changing environment, and expire when they fail to provide useful predictions over periods of time. The predictions output by individual artificial-life agents are used to provide consensus predictions by the artificial-life-agent population to a cloud-infrastructure-management or distributed-application-management controller. Artificial-life agents are well-known, but use of artificial-life agents to manage distributed applications and cloud infrastructure and the modifications and enhancements of artificial-life agents to enable the modified and enhanced artificial-life agents to facilitate management of distributed applications and cloud infrastructure, as disclosed in the current document, is both novel and useful.

### BRIEF DESCRIPTION OF THE DRAWINGS

Figure 1 provides a general architectural diagram for various types of computers.
Figure 2 illustrates an Internet-connected distributed computing system.
Figure 3 illustrates cloud computing.
Figure 4 illustrates generalized hardware and software components of a general-purpose computer system, such as a general-purpose computer system having an architecture similar to that shown in Figure 1.
Figures 5A-D illustrate two types of virtual machine and virtual-machine execution environments.
Figure 6 illustrates an OVF package.
Figure 7 illustrates virtual data centers provided as an abstraction of underlying physical-data-center hardware components.
Figures 8A-C illustrate resources allocated to a distributed application within a distributed computer system at three different points in time.
Figures 9A-D illustrate the need for resource-allocation prediction for controllers and managers of distributed computer systems, distributed applications, cloud infrastructure, and other types of resource-using computational entities.
Figures 10A-C illustrate a population of artificial-life agents.
Figure 11 illustrates the use of a population of artificial-life agents by a distributed-application-or-cloud-infrastructure controller.
Figure 12 illustrates the input and output vectors in one example implementation of the currently disclosed population of artificial-life agents used by a distributed-application controller for recommendations for control of the distributed application.
Figure 13 illustrates an artificial-life agent.
Figures 14A-B illustrate the classifier models and predictor models generated and maintained by each agent.
Figure 15 illustrates computation of a learning rate.
Figure 16 illustrates one possible approach to computing the difference or, equivalently, the similarity, between two classification models.
Figures 17A-D illustrate the genes and chromosomes of an agent as well as agent reproduction.
Figure 18 shows the state variables for an agent.
Figure 19 shows a number of control parameters that are encoded as genes within the genomes of agents and a number of constants used by the control logic of agents in the implementation discussed below.
Figures 20A-E provide control-flow diagrams that illustrate implementation of a artificial-life-agent-population manager that controls a population of artificial-life agents.
Figures 21A-D provide control-flow diagrams for the routine "agent," which represents the operational logic of each agent in the artificial-life-agent population.
Figures 22A-C provide control-flow diagrams that illustrate implementation of the routine "classify," called in steps 2145 and 2147 of Figure 21D.
Figures 23A-B provide control-flow diagrams for the routine "predict," called in step 2148 of Figure 21D.
Figures 23C-D provide control-flow diagrams that illustrate an implementation of the routine "mate," called in step 2087 of Figure 20E.
Figure 23E provides a control-flow diagram that illustrates an implementation of the routine "purge," called in step 2091 of Figure 20E.

### DETAILED DESCRIPTION

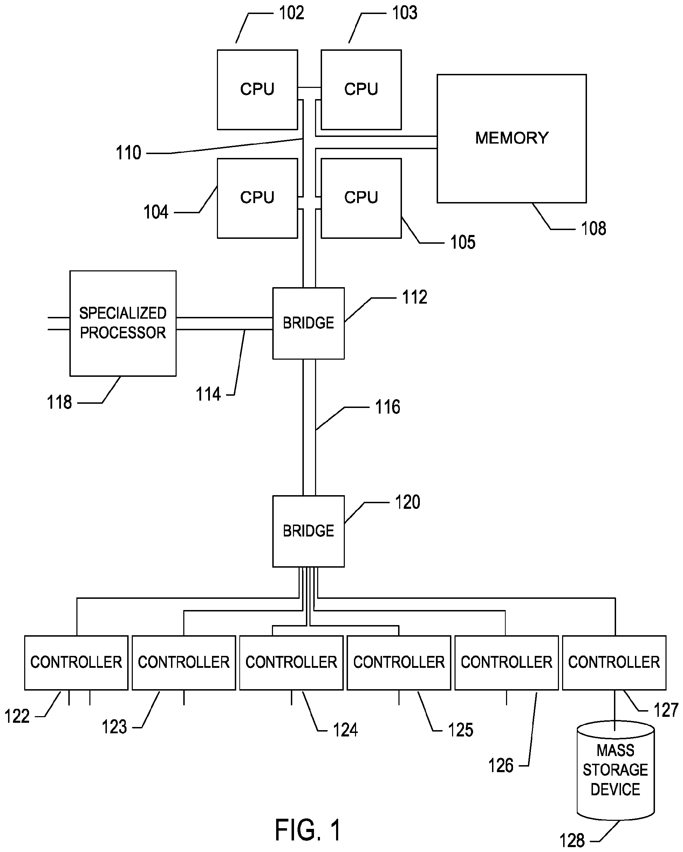

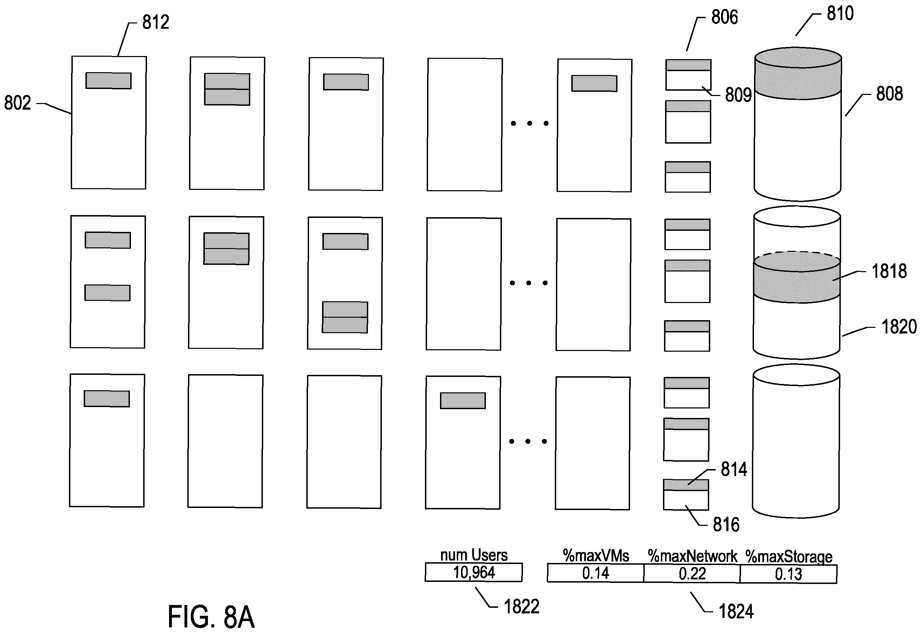

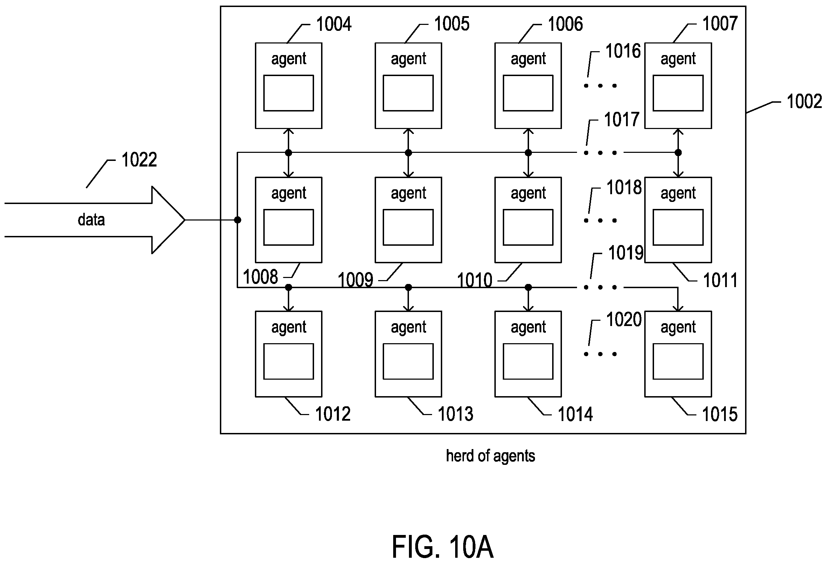

The current document is directed to distributed-computer-systems and, in particular, to management of distributed applications and cloud-infrastructure using artificial-life agents. In a first subsection, below, a detailed description of computer hardware, complex computational systems, and virtualization is provided with reference to Figures 1-7. In a second subsection, the problem domain addressed by the currently disclosed distributed-computer-system and cloud-infrastructure management systems is discussed with reference to Figures 8A-9D. Finally, in a third subsection, the currently disclosed methods and systems are discussed with reference to Figures 10A-23E.

### Computer Hardware, Complex Computational Systems, and Virtualization

The term "abstraction" is not, in any way, intended to mean or suggest an abstract idea or concept. Computational abstractions are tangible, physical interfaces that are implemented, ultimately, using physical computer hardware, data-storage devices, and communications systems. Instead, the term "abstraction" refers, in the current discussion, to a logical level of functionality encapsulated within one or more concrete, tangible, physically-implemented computer systems with defined interfaces through which electronically-encoded data is exchanged, process execution launched, and electronic services are provided. Interfaces may include graphical and textual data displayed on physical display devices as well as computer programs and routines that control physical computer processors to carry out various tasks and operations and that are invoked through electronically implemented application programming interfaces ("APIs") and other electronically implemented interfaces. There is a tendency among those unfamiliar with modem technology and science to misinterpret the terms "abstract" and "abstraction," when used to describe certain aspects of modem computing. For example, one frequently encounters assertions that, because a computational system is described in terms of abstractions, functional layers, and interfaces, the computational system is somehow different from a physical machine or device. Such allegations are unfounded. One only needs to disconnect a computer system or group of computer systems from their respective power supplies to appreciate the physical, machine nature of complex computer technologies. One also frequently encounters statements that characterize a computational technology as being "only software," and thus not a machine or device. Software is essentially a sequence of encoded symbols, such as a printout of a computer program or digitally encoded computer instructions sequentially stored in a file on an optical disk or within an electromechanical mass-storage device. Software alone can do nothing. It is only when encoded computer instructions are loaded into an electronic memory within a computer system and executed on a physical processor that so-called "software implemented" functionality is provided. The digitally encoded computer instructions are an essential and physical control component of processor-controlled machines and devices, no less essential and physical than a cam-shaft control system in an internal-combustion engine. Multi-cloud aggregations, cloud-computing services, virtual-machine containers and virtual machines, communications interfaces, and many of the other topics discussed below are tangible, physical components of physical, electro-optical-mechanical computer systems.

Figure 1 provides a general architectural diagram for various types of computers. The computer system contains one or multiple central processing units ("CPUs") 102-105, one or more electronic memories 108 interconnected with the CPUs by a CPU/memory-subsystem bus 110 or multiple busses, a first bridge 112 that interconnects the CPU/memory-subsystem bus 110 with additional busses 114 and 116, or other types of high-speed interconnection media, including multiple, high-speed serial interconnects. These busses or serial interconnections, in turn, connect the CPUs and memory with specialized processors, such as a graphics processor 118, and with one or more additional bridges 120, which are interconnected with high-speed serial links or with multiple controllers 122-127, such as controller 127, that provide access to various different types of mass-storage devices 128, electronic displays, input devices, and other such components, subcomponents, and computational resources. It should be noted that computer-readable data-storage devices include optical and electromagnetic disks, electronic memories, and other physical data-storage devices. Those familiar with modern science and technology appreciate that electromagnetic radiation and propagating signals do not store data for subsequent retrieval and can transiently "store" only a byte or less of information per mile, far less information than needed to encode even the simplest of routines.

Of course, there are many different types of computer-system architectures that differ from one another in the number of different memories, including different types of hierarchical cache memories, the number of processors and the connectivity of the processors with other system components, the number of internal communications busses and serial links, and in many other ways. However, computer systems generally execute stored programs by fetching instructions from memory and executing the instructions in one or more processors. Computer systems include general-purpose computer systems, such as personal computers ("PCs"), various types of servers and workstations, and higher-end mainframe computers, but may also include a plethora of various types of special-purpose computing devices, including data-storage systems, communications routers, network nodes, tablet computers, and mobile telephones.

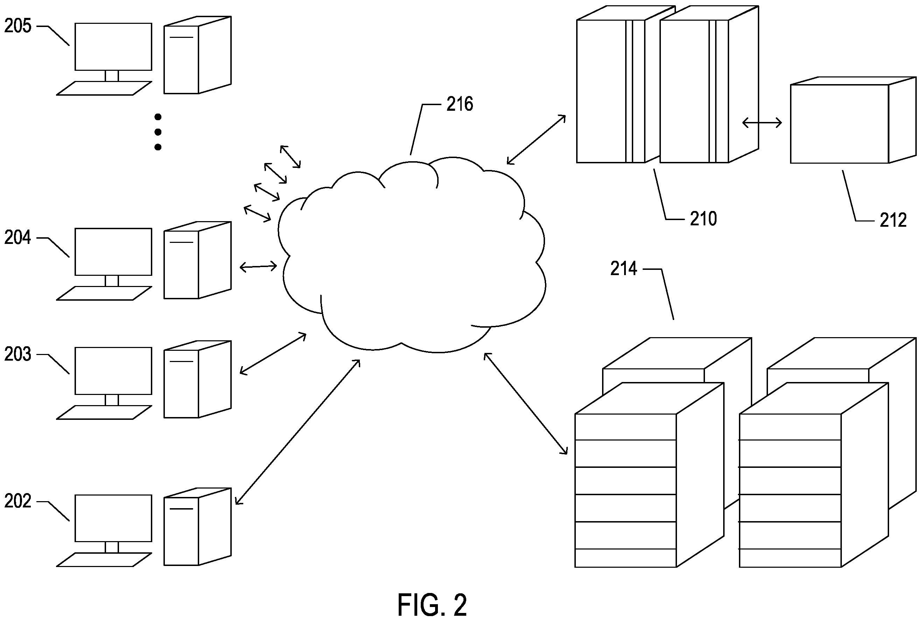

Figure 2 illustrates an Internet-connected distributed computing system. As communications and networking technologies have evolved in capability and accessibility, and as the computational bandwidths, data-storage capacities, and other capabilities and capacities of various types of computer systems have steadily and rapidly increased, much of modem computing now generally involves large distributed systems and computers interconnected by local networks, wide-area networks, wireless communications, and the Internet. Figure 2 shows a typical distributed system in which a large number of PCs 202-205, a high-end distributed mainframe system 210 with a large data-storage system 212, and a large computer center 214 with large numbers of rack-mounted servers or blade servers all interconnected through various communications and networking systems that together comprise the Internet 216. Such distributed computing systems provide diverse arrays of functionalities. For example, a PC user sitting in a home office may access hundreds of millions of different web sites provided by hundreds of thousands of different web servers throughout the world and may access high-computational-bandwidth computing services from remote computer facilities for running complex computational tasks.

Until recently, computational services were generally provided by computer systems and data centers purchased, configured, managed, and maintained by service-provider organizations. For example, an e-commerce retailer generally purchased, configured, managed, and maintained a data center including numerous web servers, back-end computer systems, and data-storage systems for serving web pages to remote customers, receiving orders through the web-page interface, processing the orders, tracking completed orders, and other myriad different tasks associated with an e-commerce enterprise.

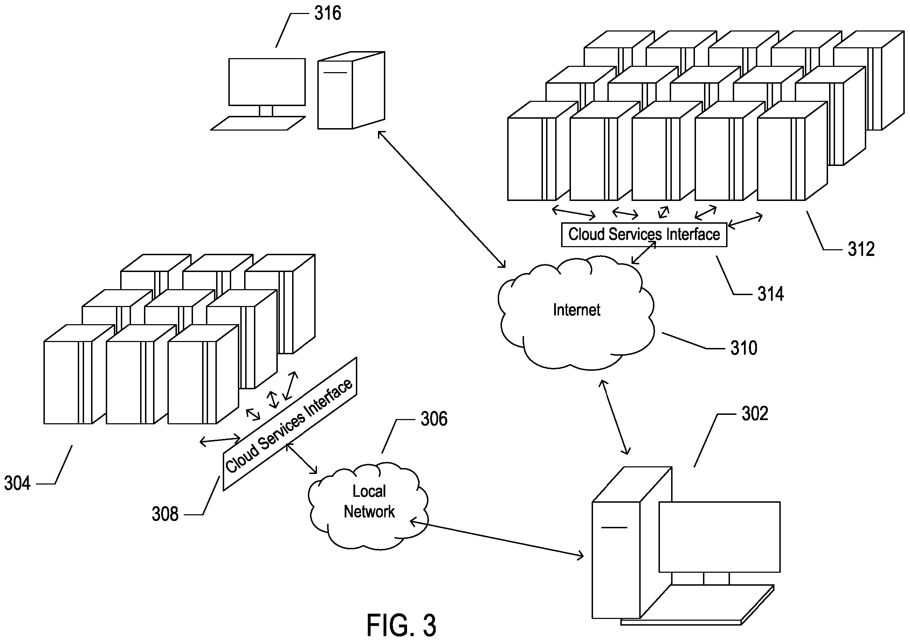

Figure 3 illustrates cloud computing. In the recently developed cloud-computing paradigm, computing cycles and data-storage facilities are provided to organizations and individuals by cloud-computing providers. In addition, larger organizations may elect to establish private cloud-computing facilities in addition to, or instead of, subscribing to computing services provided by public cloud-computing service providers. In Figure 3, a system administrator for an organization, using a PC 302, accesses the organization's private cloud 304 through a local network 306 and private-cloud interface 308 and also accesses, through the Internet 310, a public cloud 312 through a public-cloud services interface 314. The administrator can, in either the case of the private cloud 304 or public cloud 312, configure virtual computer systems and even entire virtual data centers and launch execution of application programs on the virtual computer systems and virtual data centers in order to carry out any of many different types of computational tasks. As one example, a small organization may configure and run a virtual data center within a public cloud that executes web servers to provide an e-commerce interface through the public cloud to remote customers of the organization, such as a user viewing the organization's e-commerce web pages on a remote user system 316.

Cloud-computing facilities are intended to provide computational bandwidth and data-storage services much as utility companies provide electrical power and water to consumers. Cloud computing provides enormous advantages to small organizations without the resources to purchase, manage, and maintain in-house data centers. Such organizations can dynamically add and delete virtual computer systems from their virtual data centers within public clouds in order to track computational-bandwidth and data-storage needs, rather than purchasing sufficient computer systems within a physical data center to handle peak computational-bandwidth and data-storage demands. Moreover, small organizations can completely avoid the overhead of maintaining and managing physical computer systems, including hiring and periodically retraining information-technology specialists and continuously paying for operating-system and database-management-system upgrades. Furthermore, cloud-computing interfaces allow for easy and straightforward configuration of virtual computing facilities, flexibility in the types of applications and operating systems that can be configured, and other functionalities that are useful even for owners and administrators of private cloud-computing facilities used by a single organization.

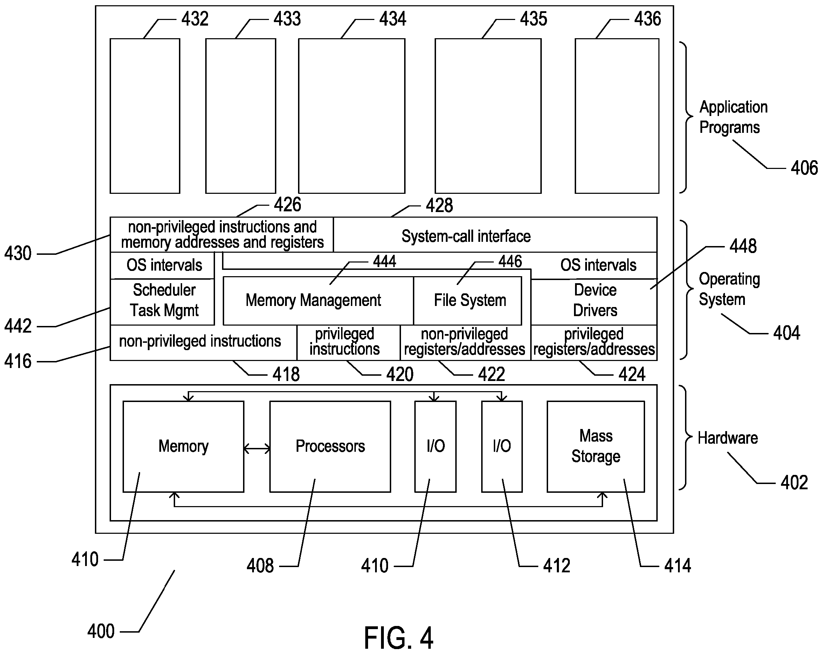

Figure 4 illustrates generalized hardware and software components of a general-purpose computer system, such as a general-purpose computer system having an architecture similar to that shown in Figure 1. The computer system 400 is often considered to include three fundamental layers: (1) a hardware layer or level 402; (2) an operating-system layer or level 404; and (3) an application-program layer or level 406. The hardware layer 402 includes one or more processors 408, system memory 410, various different types of input-output ("I/O") devices 410 and 412, and mass-storage devices 414. Of course, the hardware level also includes many other components, including power supplies, internal communications links and busses, specialized integrated circuits, many different types of processor-controlled or microprocessor-controlled peripheral devices and controllers, and many other components. The operating system 404 interfaces to the hardware level 402 through a low-level operating system and hardware interface 416 generally comprising a set of non-privileged computer instructions 418, a set of privileged computer instructions 420, a set of non-privileged registers and memory addresses 422, and a set of privileged registers and memory addresses 424. In general, the operating system exposes non-privileged instructions, non-privileged registers, and non-privileged memory addresses 426 and a system-call interface 428 as an operating-system interface 430 to application programs 432-436 that execute within an execution environment provided to the application programs by the operating system. The operating system, alone, accesses the privileged instructions, privileged registers, and privileged memory addresses. By reserving access to privileged instructions, privileged registers, and privileged memory addresses, the operating system can ensure that application programs and other higher-level computational entities cannot interfere with one another's execution and cannot change the overall state of the computer system in ways that could deleteriously impact system operation. The operating system includes many internal components and modules, including a scheduler 442, memory management 444, a file system 446, device drivers 448, and many other components and modules. To a certain degree, modern operating systems provide numerous levels of abstraction above the hardware level, including virtual memory, which provides to each application program and other computational entities a separate, large, linear memory-address space that is mapped by the operating system to various electronic memories and mass-storage devices. The scheduler orchestrates interleaved execution of various different application programs and higher-level computational entities, providing to each application program a virtual, stand-alone system devoted entirely to the application program. From the application program's standpoint, the application program executes continuously without concern for the need to share processor resources and other system resources with other application programs and higher-level computational entities. The device drivers abstract details of hardware-component operation, allowing application programs to employ the system-call interface for transmitting and receiving data to and from communications networks, mass-storage devices, and other I/O devices and subsystems. The file system 436 facilitates abstraction of mass-storage-device and memory resources as a high-level, easy-to-access, file-system interface. Thus, the development and evolution of the operating system has resulted in the generation of a type of multi-faceted virtual execution environment for application programs and other higher-level computational entities.

While the execution environments provided by operating systems have proved to be an enormously successful level of abstraction within computer systems, the operating-system-provided level of abstraction is nonetheless associated with difficulties and challenges for developers and users of application programs and other higher-level computational entities. One difficulty arises from the fact that there are many different operating systems that run within various different types of computer hardware. In many cases, popular application programs and computational systems are developed to run on only a subset of the available operating systems and can therefore be executed within only a subset of the various different types of computer systems on which the operating systems are designed to run. Often, even when an application program or other computational system is ported to additional operating systems, the application program or other computational system can nonetheless run more efficiently on the operating systems for which the application program or other computational system was originally targeted. Another difficulty arises from the increasingly distributed nature of computer systems. Although distributed operating systems are the subject of considerable research and development efforts, many of the popular operating systems are designed primarily for execution on a single computer system. In many cases, it is difficult to move application programs, in real time, between the different computer systems of a distributed computing system for high-availability, fault-tolerance, and load-balancing purposes. The problems are even greater in heterogeneous distributed computing systems which include different types of hardware and devices running different types of operating systems. Operating systems continue to evolve, as a result of which certain older application programs and other computational entities may be incompatible with more recent versions of operating systems for which they are targeted, creating compatibility issues that are particularly difficult to manage in large distributed systems.

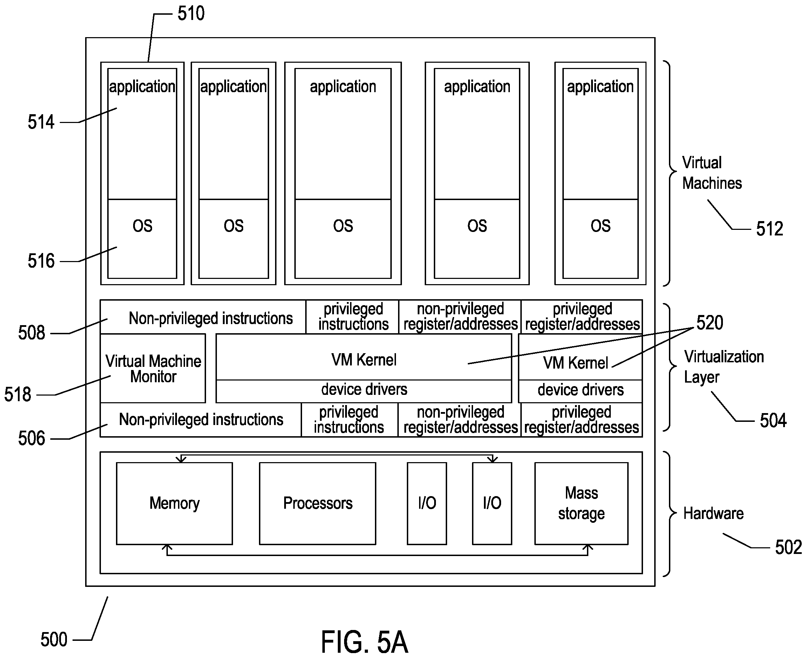

For all of these reasons, a higher level of abstraction, referred to as the "virtual machine," has been developed and evolved to further abstract computer hardware in order to address many difficulties and challenges associated with traditional computing systems, including the compatibility issues discussed above. Figures 5A-D illustrate several types of virtual machine and virtual-machine execution environments. Figures 5A-B use the same illustration conventions as used in Figure 4. Figure 5A shows a first type of virtualization. The computer system 500 in Figure 5A includes the same hardware layer 502 as the hardware layer 402 shown in Figure 4. However, rather than providing an operating system layer directly above the hardware layer, as in Figure 4, the virtualized computing environment illustrated in Figure 5A features a virtualization layer 504 that interfaces through a virtualization-layer/hardware-layer interface 506, equivalent to interface 416 in Figure 4, to the hardware. The virtualization layer provides a hardware-like interface 508 to a number of virtual machines, such as virtual machine 510, executing above the virtualization layer in a virtual-machine layer 512. Each virtual machine includes one or more application programs or other higher-level computational entities packaged together with an operating system, referred to as a "guest operating system," such as application 514 and guest operating system 516 packaged together within virtual machine 510. Each virtual machine is thus equivalent to the operating-system layer 404 and application-program layer 406 in the general-purpose computer system shown in Figure 4. Each guest operating system within a virtual machine interfaces to the virtualization-layer interface 508 rather than to the actual hardware interface 506. The virtualization layer partitions hardware resources into abstract virtual-hardware layers to which each guest operating system within a virtual machine interfaces. The guest operating systems within the virtual machines, in general, are unaware of the virtualization layer and operate as if they were directly accessing a true hardware interface. The virtualization layer ensures that each of the virtual machines currently executing within the virtual environment receive a fair allocation of underlying hardware resources and that all virtual machines receive sufficient resources to progress in execution. The virtualization-layer interface 508 may differ for different guest operating systems. For example, the virtualization layer is generally able to provide virtual hardware interfaces for a variety of different types of computer hardware. This allows, as one example, a virtual machine that includes a guest operating system designed for a particular computer architecture to run on hardware of a different architecture. The number of virtual machines need not be equal to the number of physical processors or even a multiple of the number of processors.

The virtualization layer includes a virtual-machine-monitor module 518 ("VMM") that virtualizes physical processors in the hardware layer to create virtual processors on which each of the virtual machines executes. For execution efficiency, the virtualization layer attempts to allow virtual machines to directly execute non-privileged instructions and to directly access non-privileged registers and memory. However, when the guest operating system within a virtual machine accesses virtual privileged instructions, virtual privileged registers, and virtual privileged memory through the virtualization-layer interface 508, the accesses result in execution of virtualization-layer code to simulate or emulate the privileged resources. The virtualization layer additionally includes a kernel module 520 that manages memory, communications, and data-storage machine resources on behalf of executing virtual machines ("VM kernel"). The VM kernel, for example, maintains shadow page tables on each virtual machine so that hardware-level virtual-memory facilities can be used to process memory accesses. The VM kernel additionally includes routines that implement virtual communications and data-storage devices as well as device drivers that directly control the operation of underlying hardware communications and data-storage devices. Similarly, the VM kernel virtualizes various other types of I/O devices, including keyboards, optical-disk drives, and other such devices. The virtualization layer essentially schedules execution of virtual machines much like an operating system schedules execution of application programs, so that the virtual machines each execute within a complete and fully functional virtual hardware layer.

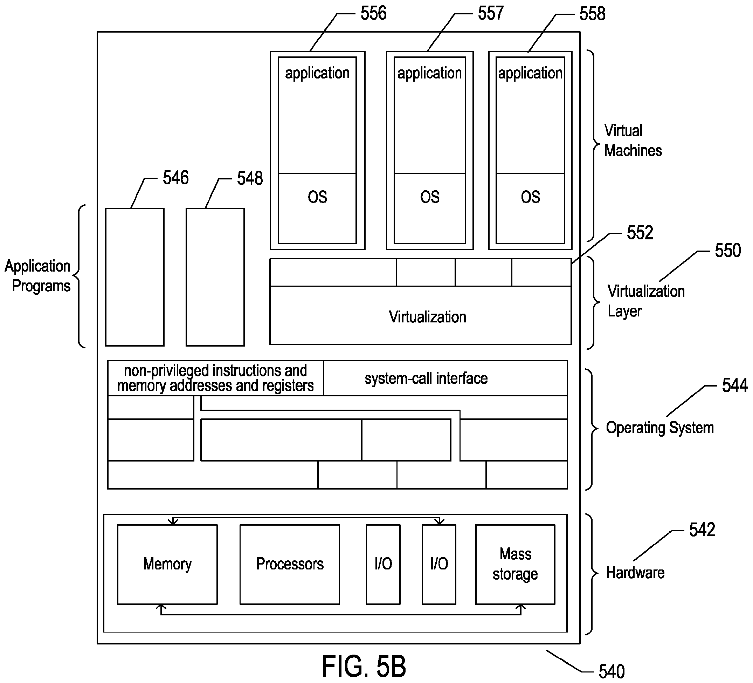

Figure 5B illustrates a second type of virtualization. In Figure 5B, the computer system 540 includes the same hardware layer 542 and software layer 544 as the hardware layer 402 shown in Figure 4. Several application programs 546 and 548 are shown running in the execution environment provided by the operating system. In addition, a virtualization layer 550 is also provided, in computer 540, but, unlike the virtualization layer 504 discussed with reference to Figure 5A, virtualization layer 550 is layered above the operating system 544, referred to as the "host OS," and uses the operating system interface to access operating-system-provided functionality as well as the hardware. The virtualization layer 550 comprises primarily a VMM and a hardware-like interface 552, similar to hardware-like interface 508 in Figure 5A. The virtualization-layer/hardware-layer interface 552, equivalent to interface 416 in Figure 4, provides an execution environment for a number of virtual machines 556-558, each including one or more application programs or other higher-level computational entities packaged together with a guest operating system.

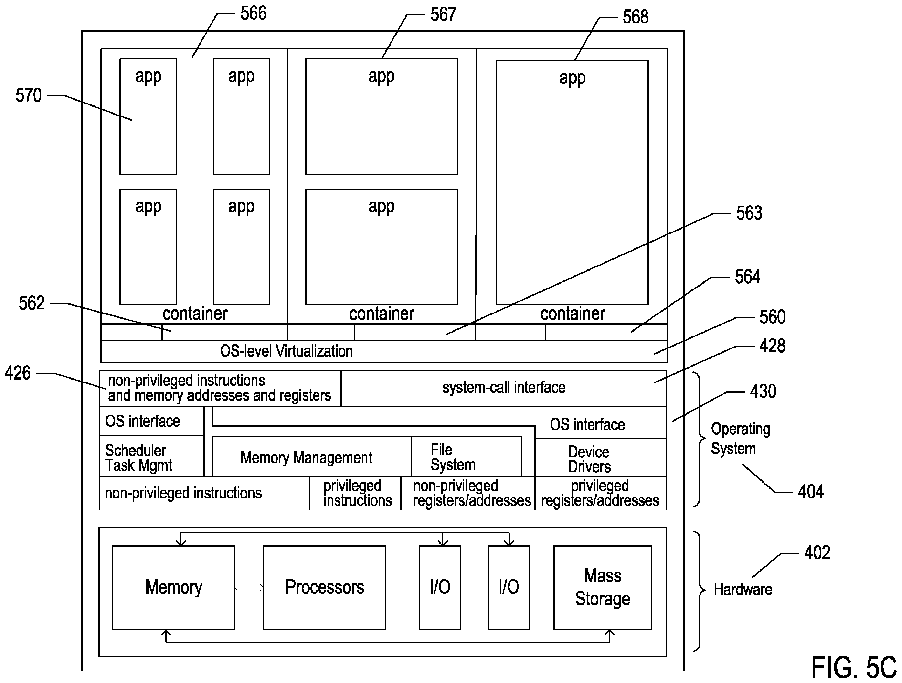

While the traditional virtual-machine-based virtualization layers, described with reference to Figures 5A-B, have enjoyed widespread adoption and use in a variety of different environments, from personal computers to enormous, distributed computing systems, traditional virtualization technologies are associated with computational overheads. While these computational overheads have been steadily decreased, over the years, and often represent ten percent or less of the total computational bandwidth consumed by an application running in a virtualized environment, traditional virtualization technologies nonetheless involve computational costs in return for the power and flexibility that they provide. Another approach to virtualization is referred to as operating-system-level virtualization ("OSL virtualization"). Figure 5C illustrates the OSL-virtualization approach. In Figure 5C, as in previously discussed Figure 4, an operating system 404 runs above the hardware 402 of a host computer. The operating system provides an interface for higher-level computational entities, the interface including a system-call interface 428 and exposure to the non-privileged instructions and memory addresses and registers 426 of the hardware layer 402. However, unlike in Figure 5A, rather than applications running directly above the operating system, OSL virtualization involves an OS-level virtualization layer 560 that provides an operating-system interface 562-564 to each of one or more containers 566-568. The containers, in turn, provide an execution environment for one or more applications, such as application 570 running within the execution environment provided by container 566. The container can be thought of as a partition of the resources generally available to higher-level computational entities through the operating system interface 430. While a traditional virtualization layer can simulate the hardware interface expected by any of many different operating systems, OSL virtualization essentially provides a secure partition of the execution environment provided by a particular operating system. As one example, OSL virtualization provides a file system to each container, but the file system provided to the container is essentially a view of a partition of the general file system provided by the underlying operating system. In essence, OSL virtualization uses operating-system features, such as namespace support, to isolate each container from the remaining containers so that the applications executing within the execution environment provided by a container are isolated from applications executing within the execution environments provided by all other containers. As a result, a container can be booted up much faster than a virtual machine, since the container uses operating-system-kernel features that are already available within the host computer. Furthermore, the containers share computational bandwidth, memory, network bandwidth, and other computational resources provided by the operating system, without resource overhead allocated to virtual machines and virtualization layers. Again, however, OSL virtualization does not provide many desirable features of traditional virtualization. As mentioned above, OSL virtualization does not provide a way to run different types of operating systems for different groups of containers within the same host system, nor does OSL-virtualization provide for live migration of containers between host computers, as does traditional virtualization technologies.

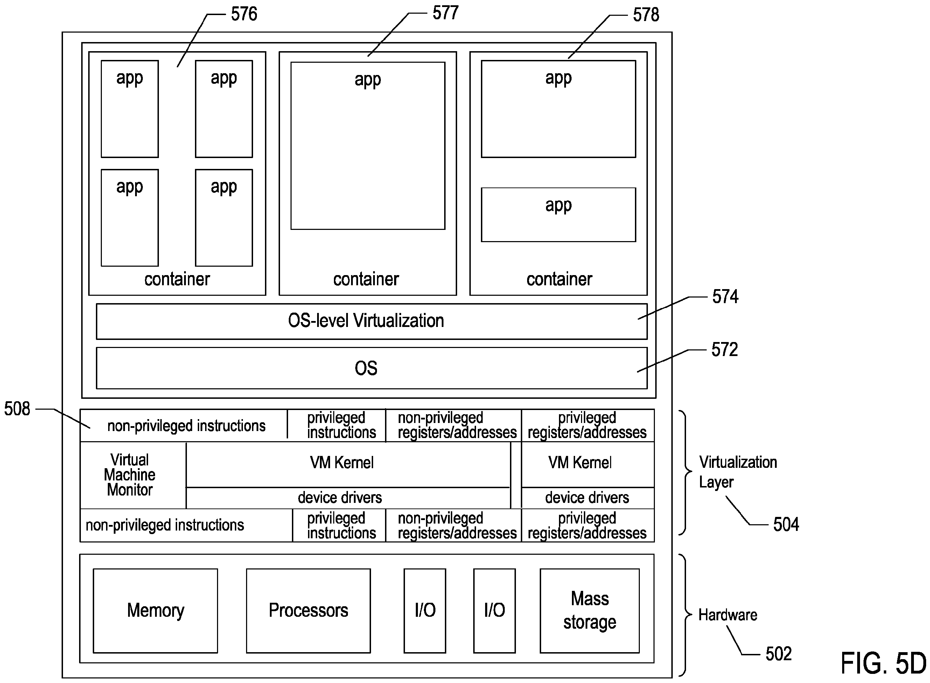

Figure 5D illustrates an approach to combining the power and flexibility of traditional virtualization with the advantages of OSL virtualization. Figure 5D shows a host computer similar to that shown in Figure 5A, discussed above. The host computer includes a hardware layer 502 and a virtualization layer 504 that provides a simulated hardware interface 508 to an operating system 572. Unlike in Figure 5A, the operating system interfaces to an OSL-virtualization layer 574 that provides container execution environments 576-578 to multiple application programs. Running containers above a guest operating system within a virtualized host computer provides many of the advantages of traditional virtualization and OSL virtualization. Containers can be quickly booted in order to provide additional execution environments and associated resources to new applications. The resources available to the guest operating system are efficiently partitioned among the containers provided by the OSL-virtualization layer 574. Many of the powerful and flexible features of the traditional virtualization technology can be applied to containers running above guest operating systems including live migration from one host computer to another, various types of high-availability and distributed resource sharing, and other such features. Containers provide share-based allocation of computational resources to groups of applications with guaranteed isolation of applications in one container from applications in the remaining containers executing above a guest operating system. Moreover, resource allocation can be modified at run time between containers. The traditional virtualization layer provides flexible and easy scaling and a simple approach to operating-system upgrades and patches. Thus, the use of OSL virtualization above traditional virtualization, as illustrated in Figure 5D, provides much of the advantages of both a traditional virtualization layer and the advantages of OSL virtualization. Note that, although only a single guest operating system and OSL virtualization layer as shown in Figure 5D, a single virtualized host system can run multiple different guest operating systems within multiple virtual machines, each of which supports one or more containers.

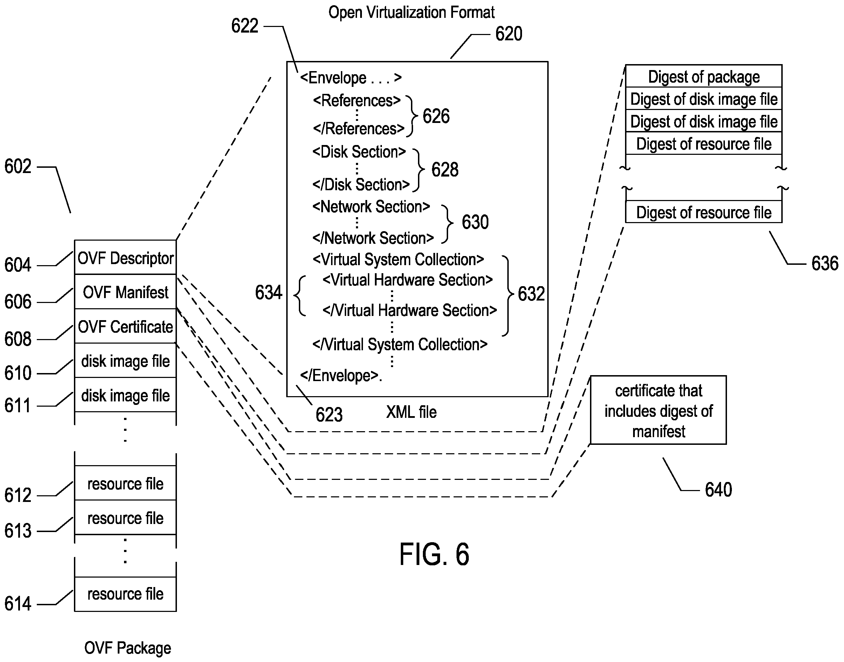

A virtual machine or virtual application, described below, is encapsulated within a data package for transmission, distribution, and loading into a virtual-execution environment. One public standard for virtual-machine encapsulation is referred to as the "open virtualization format" ("OVF"). The OVF standard specifies a format for digitally encoding a virtual machine within one or more data files. Figure 6 illustrates an OVF package. An OVF package 602 includes an OVF descriptor 604, an OVF manifest 606, an OVF certificate 608, one or more disk-image files 610-611, and one or more resource files 612-614. The OVF package can be encoded and stored as a single file or as a set of files. The OVF descriptor 604 is an XML document 620 that includes a hierarchical set of elements, each demarcated by a beginning tag and an ending tag. The outermost, or highest-level, element is the envelope element, demarcated by tags 622 and 623. The next-level element includes a reference element 626 that includes references to all files that are part of the OVF package, a disk section 628 that contains meta information about all of the virtual disks included in the OVF package, a networks section 630 that includes meta information about all of the logical networks included in the OVF package, and a collection of virtual-machine configurations 632 which further includes hardware descriptions of each virtual machine 634. There are many additional hierarchical levels and elements within a typical OVF descriptor. The OVF descriptor is thus a self-describing XML file that describes the contents of an OVF package. The OVF manifest 606 is a list of cryptographic-hash-function-generated digests 636 of the entire OVF package and of the various components of the OVF package. The OVF certificate 608 is an authentication certificate 640 that includes a digest of the manifest and that is cryptographically signed. Disk image files, such as disk image file 610, are digital encodings of the contents of virtual disks and resource files 612 are digitally encoded content, such as operating-system images. A virtual machine or a collection of virtual machines encapsulated together within a virtual application can thus be digitally encoded as one or more files within an OVF package that can be transmitted, distributed, and loaded using well-known tools for transmitting, distributing, and loading files. A virtual appliance is a software service that is delivered as a complete software stack installed within one or more virtual machines that is encoded within an OVF package.

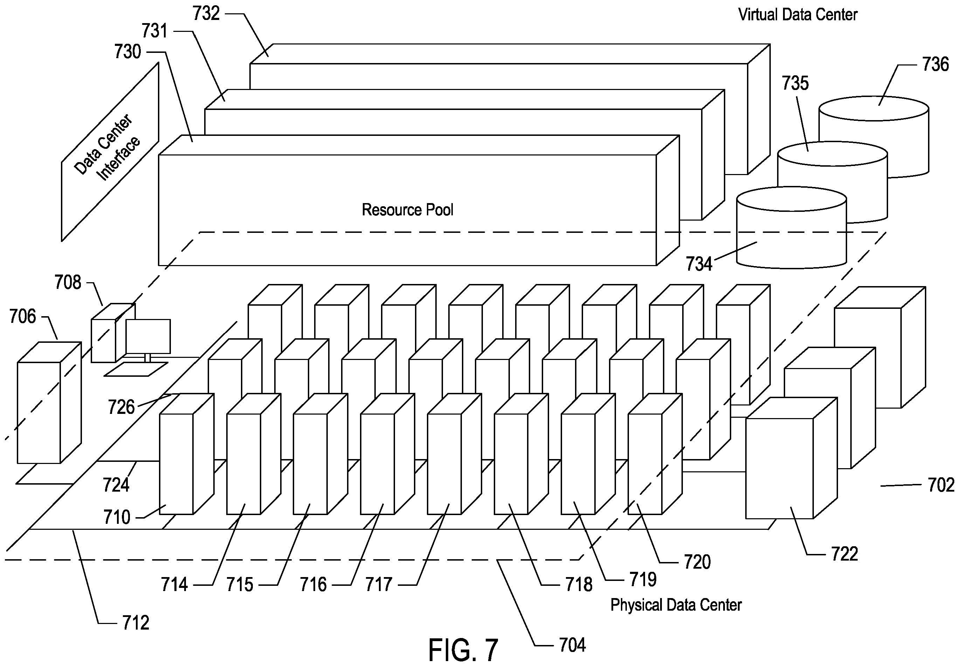

The advent of virtual machines and virtual environments has alleviated many of the difficulties and challenges associated with traditional general-purpose computing. Machine and operating-system dependencies can be significantly reduced or entirely eliminated by packaging applications and operating systems together as virtual machines and virtual appliances that execute within virtual environments provided by virtualization layers running on many different types of computer hardware. A next level of abstraction, referred to as virtual data centers which are one example of a broader virtual-infrastructure category, provide a data-center interface to virtual data centers computationally constructed within physical data centers. Figure 7 illustrates virtual data centers provided as an abstraction of underlying physical-data-center hardware components. In Figure 7, a physical data center 702 is shown below a virtual-interface plane 704. The physical data center consists of a virtual-infrastructure management server ("VI-management-server") 706 and any of various different computers, such as PCs 708, on which a virtual-data-center management interface may be displayed to system administrators and other users. The physical data center additionally includes generally large numbers of server computers, such as server computer 710, that are coupled together by local area networks, such as local area network 712 that directly interconnects server computer 710 and 714-720 and a mass-storage array 722. The physical data center shown in Figure 7 includes three local area networks 712, 724, and 726 that each directly interconnects a bank of eight servers and a mass-storage array. The individual server computers, such as server computer 710, each includes a virtualization layer and runs multiple virtual machines. Different physical data centers may include many different types of computers, networks, data-storage systems and devices connected according to many different types of connection topologies. The virtual-data-center abstraction layer 704, a logical abstraction layer shown by a plane in Figure 7, abstracts the physical data center to a virtual data center comprising one or more resource pools, such as resource pools 730-732, one or more virtual data stores, such as virtual data stores 734-736, and one or more virtual networks. In certain implementations, the resource pools abstract banks of physical servers directly interconnected by a local area network.

### Problem Domain Addressed by, and Overview of, the Currently Disclosed Methods and Systems

Figures 8A-C illustrate resources allocated to a distributed application within a distributed computer system at three different points in time. Figures 8A-C all use the same illustration conventions, next discussed with reference to Figure 8A. The distributed computer system is represented by a large number of server computers, such as server computer 802, a number of networking components, such as network controllers, routers, and communications media, represented by rectangles, such as rectangle 804, in vertical column 806, and data-storage components and/or appliances, represented by cylindrical volumes, such as cylindrical volume 808, in a final column 810. Virtual machines allocated to the distributed application within each server are represented by shaded rectangles, such as shaded rectangles 812. Portions of the networking components allocated to the distributed application are represented by shaded portions of the rectangles representing the networking components, such as the shaded portion 814 of networking component 816, and portions of the data-storage components allocated to the distributed application are represented by shaded portions of the cylindrical volumes representing the data-storage components, such as the shaded portion 818 of the data-storage component 1820. In a lower portion of Figure 8A, the current number of users of the distributed application 1822 and the fractions of the maximum numbers or capacities of the computational resources allocated to the distributed application 1824 are shown. At the point in time represented by Figure 8A, there are 10,964 users and the distributed application currently uses 0.14 or 14% of the available virtual-machine resources, 0.22 or 22% of the available networking resources, and 0.13 or 13% of the available data-storage resources provided by the distributed computer system.

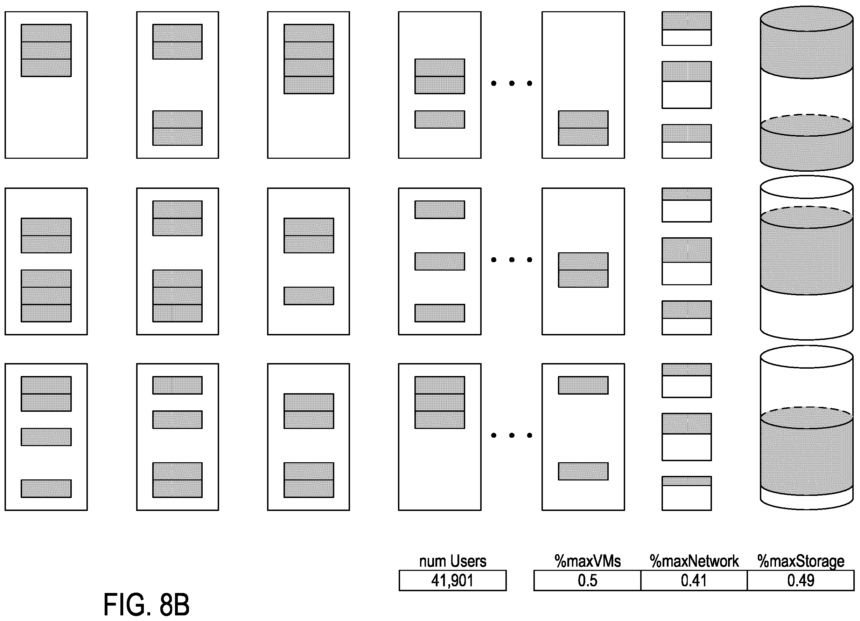

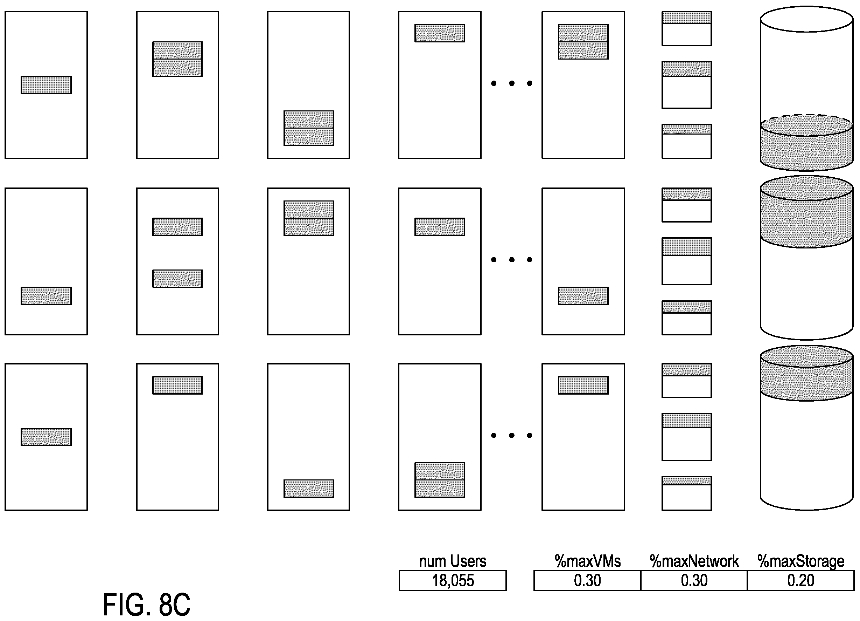

Figure 8B shows the resource allocations to the distributed application within the distributed computer system at a second point in time. At the second point in time, much larger fractions of the available computational resources have been allocated to the distributed application. This is unsurprising since the number of users of the distributed application has increased by almost a factor of 4. A distributed-application controller or manager has increased the resource allocations in order to provide a target quality of service ("QoS") to the users of the distributed application, as measured by the values of parameters such as response times and transaction times. Figure 8C shows the resource allocations to the distributed application within the distributed computer system at a third point in time. At the third point in time, the number of users of the distributed application has fallen substantially with respect to the number of users at the second point in time and the computational resources allocated to the distributed application have correspondingly fallen.

The constant change in resource allocations to the distributed application is representative of the changes in resource allocations provided to cloud infrastructure, in general, within cloud-computing facilities and changes in resource allocations observed in many different types of distributed computer systems and even standalone computer systems. In the case of cloud infrastructure, there are significant costs to clients of a cloud-infrastructure provider for allocated resources, regardless of whether the resources are currently used. However, there may be other types of costs to clients of a cloud-infrastructure provider associated with failing to allocate sufficient resources to manage current workloads, including user dissatisfaction resulting in loss of business opportunities. There are also temporal delays associated with resource allocation and utilization. It is therefore a non-trivial task to manage resource allocations for distributed computer systems, distributed applications, cloud infrastructure, and other types of computational systems.

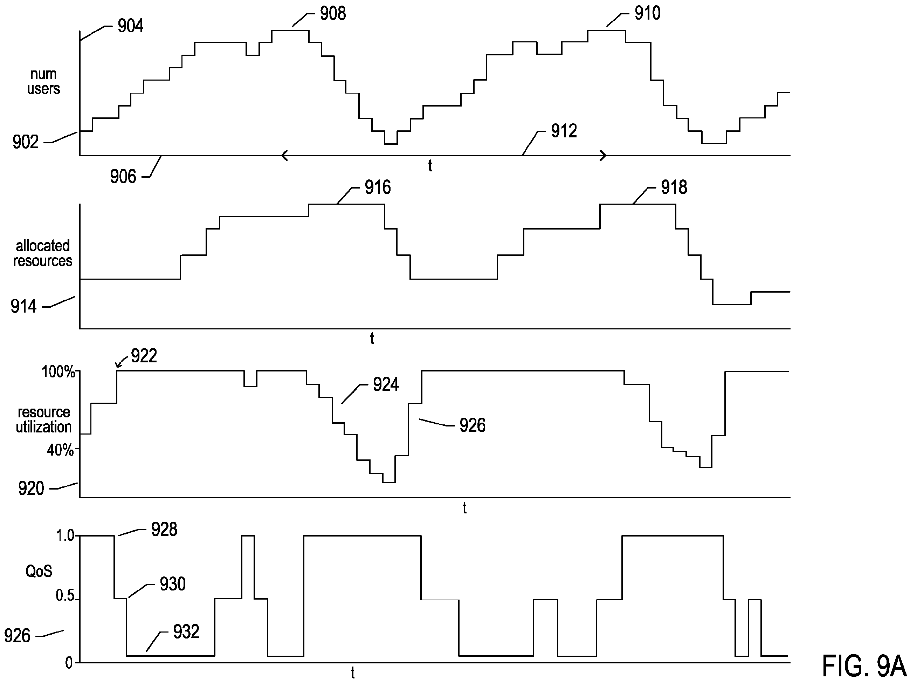

Figures 9A-D illustrate the need for resource-allocation prediction for controllers and managers of distributed computer systems, distributed applications, cloud infrastructure, and other types of resource-using computational entities. Each of Figures 9A-D uses the illustration conventions next described with reference to Figure 9A. A first plot 902 shows the number of users at different points of time, with the number of users plotted with respect to the vertical axis 904 and time plotted with respect to the horizontal axis 906. In the illustrated case, the number of users seems to oscillate at a regular frequency, with peaks 908 and 910 separated by the time period indicated by the bolded, double-headed arrow 1912.

A second plot 914, aligned in time with respect to the first plot, shows the percentage of available resources allocated to the computational entity at various time points. For simplicity, resource allocations for different classes or types of resources are aggregated in this plot. During the time periods represented by peaks 916 and 918, 100% of the available resources are allocated to the computational entity. Notice that the peaks of resource allocation are displaced rightward in time from the peaks in the number of users in the first plot. This is because the manager or controller responsible for detecting the need for resource allocation or resource deallocation is essentially reactive, incurring temporal delays between detecting increases and decreases in the number of users and allocating and deallocating resources in response to the increases and decreases in the number of users.

A third plot 920, aligned in time with the first and second plots, shows the resource utilization for the currently allocated resources. As the number of users increases in the first portion of the first plot, the resource utilization steeply increases to 100% (922) due to the time lag in allocating additional resources by the manager or controller. Eventually, as the number of users begins to decline, the resource utilization also declines 924 but then quickly begins to steeply climb again 926 as the number of users again begins to increase. The resource utilization also shows a periodic oscillation, with broader peaks due to the delays in allocating and deallocating resources by the manager or controller in response to changes in the number of users.

A fourth plot 926, aligned in time with the first, second, and third plots, shows the average QoS experienced by users of the computational entity at different points in time. The QoS has a high value of 1.0 when the resource utilization is below 100% (928), an intermediate value of 0.5 when the resource utilization is 90% (930), and a low value when the resource utilization is less than 90% (932). This is, of course, a hypothetical QoS used for illustration purposes. As can be seen in the fourth plot 926, the computational entity exhibits significant periods of time during which the QoS is less than a desired high level. The breadth of these QoS wells can be attributed, to a great extent, to the reactive nature of resource-allocation increases and decreases by the manager or controller. During steep increases in the number of users, the manager or controller is unable to track the increases in the number of users with corresponding increased resource allocations sufficiently quickly to avoid long periods of high resource utilizations that results in a low QoS.

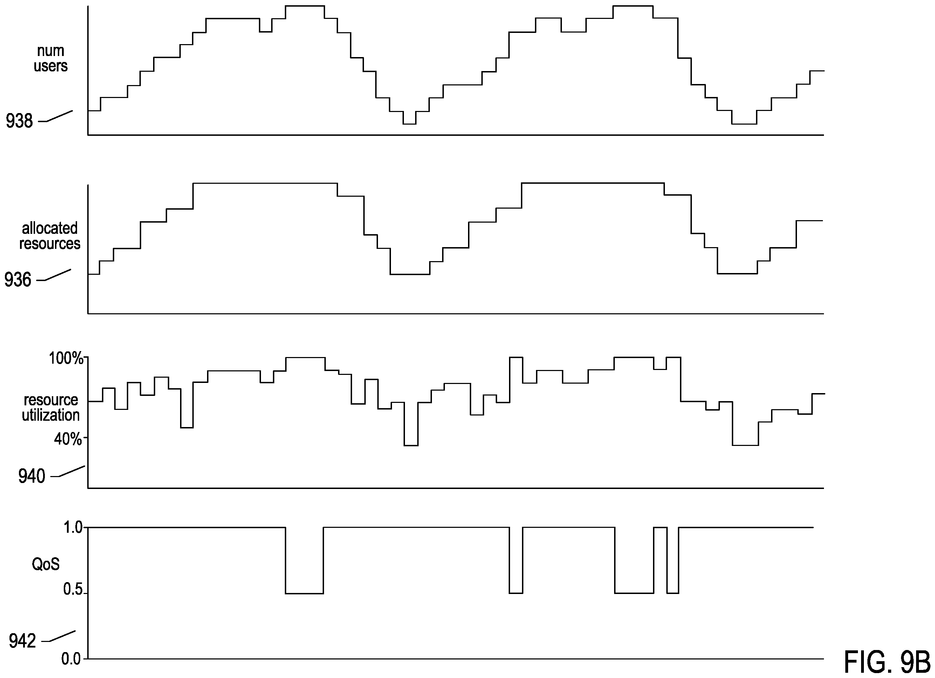

Figure 9B illustrates improvement of the control of resource allocation by the computational entity with respect to the reactive resource allocation illustrated in Figure 9A. The improved control is based on the controller having learned the general oscillating pattern of the number of users with respect to time and is thus able to anticipate increases and decreases in the number of users. The resource-allocation pattern, shown in the second plot 936, repeats with the same frequency as the oscillations in the number of users shown in the first plot 938, with minor differences arising from additional input to the controller or manager. Because the controller has learned the general pattern of the number of users with respect to time, the controller is able to prevent lengthy periods of 100% resource utilization, as can be seen by comparing the third plot 940 in Figure 9B with the third plot 920 in Figure 9A. As a result, the broad and deep wells in the plot of QoS with respect to time 926 in Figure 9A have been largely eliminated in the plot of QoS with respect to time 942 in Figure 9B. Thus, the ability of a controller to predict the increases and decreases in the number of users or, equivalently, to predict the needed increases and decreases in the allocated resources, allows the controller to anticipate the need to increase and decrease the allocated resources at each point in time and to therefore provide significantly greater periods of desired levels of QoS while optimizing financial expenditures for computational resources.

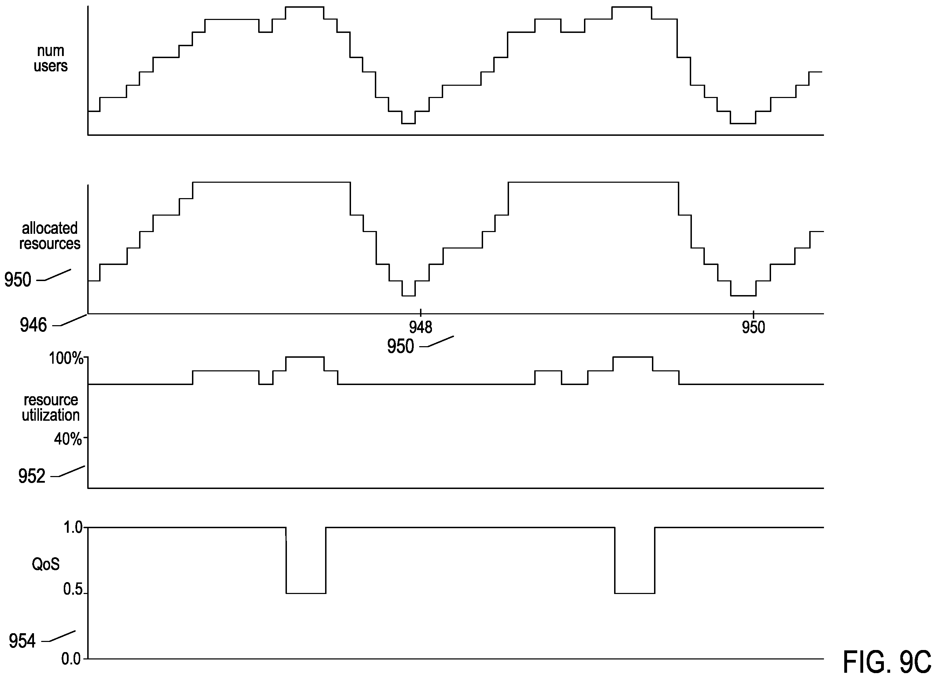

Figure 9C illustrates a further improvement in the control of resource allocation by the computational entity with respect to the predictive resource allocation illustrated in Figure 9B. The further improved controller or manager does not repeatedly apply a general pattern of needed increases and decreases in resource allocation, but instead is able to supplement the learned general pattern with additional learned responses to inputs to provide an adaptive predictive resource allocation and deallocation. Thus, the pattern of resource allocation, in plot 950 in Figure 9C, in a first time period, between time points 946 and 948, differs from the pattern of resource allocation in a second time period between time points 948 and 950 more than the patterns of resource allocations differ from one another in the same two time periods in plot 936 in Figure 9B. The differences represent continuous adaptations made by the controller to the general learned patterns of resource allocations or, equivalently, the learned patterns of the number of users with respect to time. As a result, the resource utilization with respect to time, shown in plot 952 in Figure 9C is considerably smoother than that shown in plot 940 in Figure 9B and the QoS shown in plot 954 in Figure 9C contains fewer periods of less than desirable QoS than in plot 942 of Figure 9B.

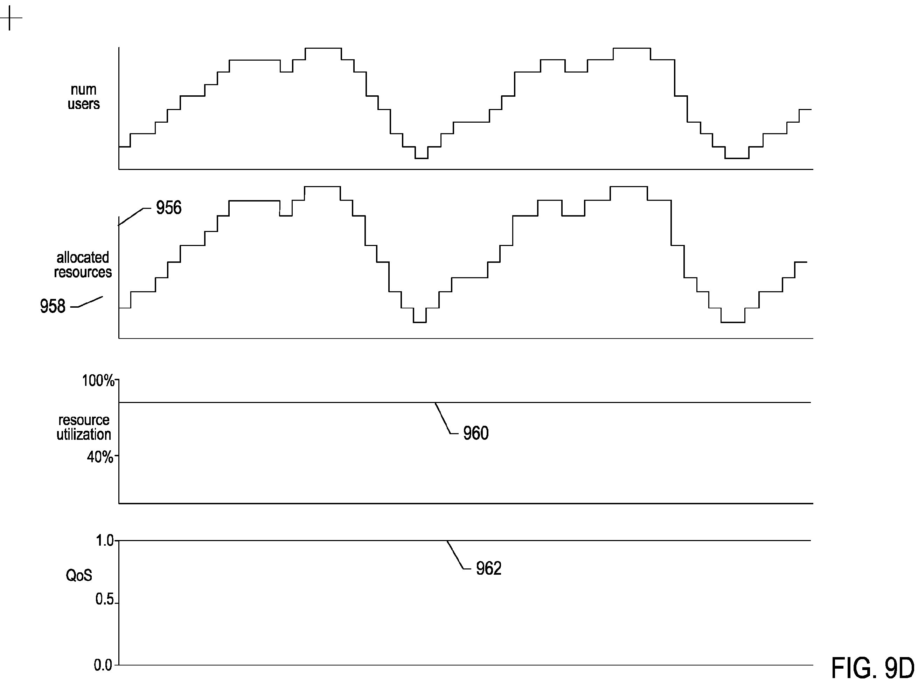

Figure 9D illustrates a further improvement in the control of resource allocation by the computational entity with respect to the adaptive and predictive resource allocation and deallocation resource allocation illustrated in Figure 9C. The further improvement involves adjusting the maximum resource allocations made by the controller, as represented by the increased height of the vertical axis 956 of the allocated-resources plot 958 in Figure 9D. As a result, the cases in which sufficient resources cannot be allocated to manage the number of users are avoided, resulting in a constant, desired level of resource utilization 960 and a constant desired QoS 962.

Thus, the problem with current controllers and managers of computational entities, such as distributed applications, distributed computer systems, and cloud infrastructure, is that the current controllers and managers are unable to predict resource-allocation needs sufficiently far enough in advance of the resource-allocation needs to avoid preventing high levels of resource utilization that degrade the QoS. Furthermore, not only do controllers and managers of computational entities need to predict resource-allocation needs, but they must also adapt relatively quickly to changing conditions rather than simply repeatedly applying a learned pattern of resource allocation and they also need to predict the maximum amount of resources that they may need to reserve for future allocation.

### Currently Disclosed Methods and Systems

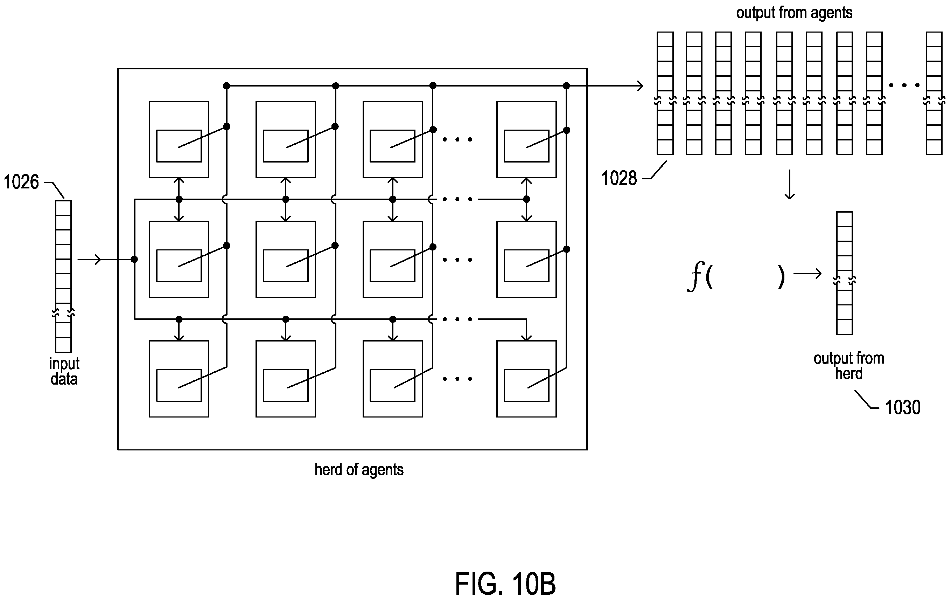

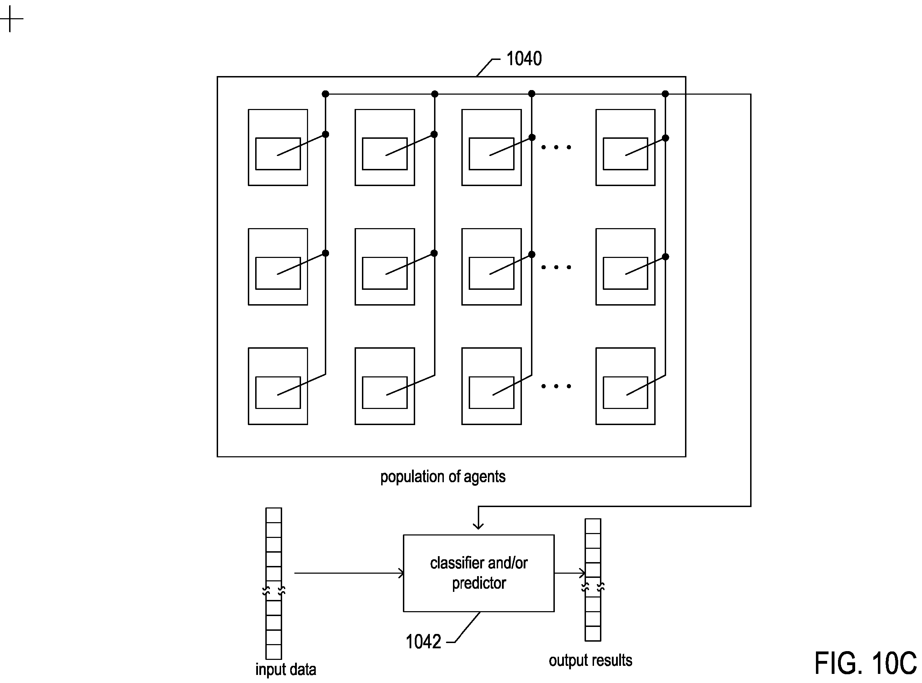

Figures 10A-C illustrate a population of artificial-life agents. The currently disclosed controller or manager of a computational entity, such as a distributed application or cloud infrastructure, employs a population of artificial-life agents 1002 for adaptively predicting and recommending control parameters, such as computational-resource allocations and deallocations. As noted above, the current document is not directed to artificial-life agents, which are well-known. Instead, the current document is directed to using a population of modified and enhanced artificial-life agents to facilitate control of a distributed application or cloud infrastructure, with the modifications and enhancements providing specific characteristics and capabilities to the artificial-life agents for facilitating control of a distributed application or cloud infrastructure. The population of artificial-life agents includes multiple artificial-life agents 1004-1015, with ellipses 1016, 1018, and 1020 indicating additional artificial-life agents. The controller or manager provides input data to the population of artificial-life agents. As shown in Figure 10B, in one use of the population of artificial-life agents, the controller or manager inputs a data vector 1026 to the population of artificial-life agents, with each agent receiving a copy of the input-data vector or a copy of an internal input-data vector generated from the input-data vector, processing the received input data vector, and outputting a corresponding output vector such as output vector 1028. The output vectors output by the artificial-life agents within the population are then processed by the population to produce an aggregate output vector 1030 which represents control-parameter recommendations made by the population of artificial-life agents. The controller or manager can then use the recommendations to select and carry out control operations, including increasing or decreasing resource allocations, increasing the maximum numbers and capacities of resources available to the distributed application or cloud infrastructure controlled by the controller or manager, and other such control and management operations. The artificial-life agents include memories and logic and are able to learn to provide accurate and useful recommendations as well as to adapt to changing conditions reflected in changes to the input data received by the artificial-life agents. Thus, use of the population of artificial-life agents by the controller or manager addresses the problems discussed above with reference to Figures 8A-9D. A controller or manager can alternatively use a population of artificial-life agents 1040 that have learned to make useful and accurate recommendations over time, as shown in Figure 10C, by extracting recommendation logic from the artificial-life agents and using the extracted recommendation logic to construct a classifier and/or predictor 1042 which can then be used for generating recommendations in response to input data.

In the following discussion, artificial-life agents are referred to as "agents" and a population of artificial-life agents is referred to as a "population." An agent can be implemented on a standalone computer system, a virtual machine, on other types of computational entities that provide execution environments, and as a distributed agent implemented within multiple execution environments. Similarly, a population may also be implemented on one or more standalone computer systems, one or more virtual machines, and on other types of computational entities that provide execution environments for multiple threads and/or processes. The data input to a population in an input data vector may include any of various different types of information related to the current state of a distributed application or cloud infrastructure and to desired states of the distributed application or cloud infrastructure as well as other types of control information. The data output by the population in an output data vector includes various types of recommendations to a controller or manager for control operations that produce desired states in the distributed application or cloud infrastructure controlled or managed by the controller or manager.

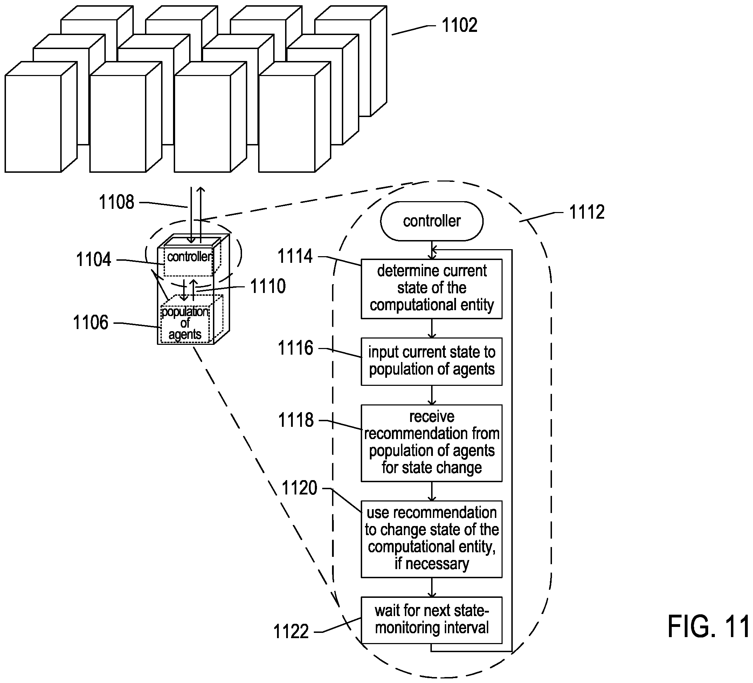

Figure 11 illustrates the use of a population of artificial-life agents by a distributed-application-or-cloud-infrastructure controller. An example shown in Figure 11, the distributed application or cloud infrastructure is a distributed computer system 1102 and the controller 1104 and the population of artificial-life agents 1106 run within either a standalone computer system or a server component of the distributed computer system 1102. In alternative implementations, the population of artificial-life agents may be distributed across multiple computer systems and may execute in a computer system different from the computer system or computer systems in which the controller executes. As indicated by arrows 1108, the controller receives state information from the distributed application or cloud infrastructure and issues control operations to the distributed application or to a cloud provider. Arrows 1110 indicate that the controller inputs state information and other control information to the population of artificial-life agents and to receives, from the population of artificial-life agents, recommendations for control operations that are likely to result in a desired state of the distributed application or cloud infrastructure. The interaction between the controller, distributed application or cloud infrastructure, and population of artificial-life agents is encapsulated in the control-flow diagram 1112. The control-flow diagram shows a continuous process in which the controller determines the current state of the distributed application or cloud infrastructure, in step 1114, inputs an indication of the current state of the distributed application or cloud infrastructure to the population of artificial-life agents, in step 1116, receives, in response, one or more recommendations for control operations from the population of artificial-life agents, in step 1118, uses the recommendations to issue control operations to the distributed application or a cloud provider, when necessary, in step 1120, and waits for a next state-monitoring interval, in step 1122, to again carry out the monitoring and control operation of steps 1114, 1116, 1118, and 1120.

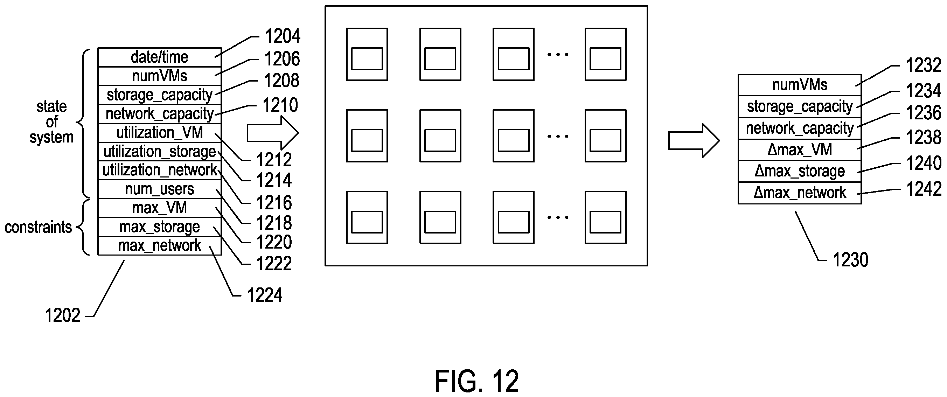

Figure 12 illustrates the input and output vectors in one example implementation of the currently disclosed population of artificial-life agents used by a distributed-application controller for recommendations for control of the distributed application. The input vector 1202 includes: (1) a date/time indication for the current time, *date*/*time*, 1204; (2) an indication of the number of virtual machines currently allocated to the distributed application, *numVMs,* 1206; (3) an indication of the data-storage capacity currently allocated to the distributed application, *storage_capacity,* 1208; (4) an indication of the network capacity currently allocated to the distributed application, *network_capacity,* 1210; (5) an indication of the utilization of the virtual machines allocated to the distributed application, *utilization_VM,* 1212; (6) an indication of the utilization of the data-storage capacity currently allocated to the distributed application, *utilization_storage,* 1214; (7) an indication of the utilization of the network capacity allocated to the distributed application, *utilization_network,* 1216; (8) an indication of the current number of users of the distributed application, *num_users,* 1218; (9) an indication of the maximum number of virtual machines that can be allocated to the distributed application, *max_VM,* 1220; (10) an indication of the maximum data-storage capacity that can be allocated to the distributed application, *max_storage,* 1222; and (11) an indication of the maximum networking capacity that can be allocated to the distributed application, *max_network,* 1224. In this example, used in the discussion below, the goal of the recommendations made by the population of artificial-life agents is to maintain the utilization of the computational resources allocated to the distributed application at a target level, such as 80% or 90% of the resource capacities, by increasing or decreasing resource allocations. The output vector 1230 includes: (1) a recommended number of virtual machines that should be allocated to the distributed application, *numVMs,* 1232; (2) a recommended data-storage capacity that should be allocated to the distributed application, *storage_capacity,* 1234; (3) a recommended networking capacity that should be allocated to the distributed application, *network_capacity* 1236; (4) an indication of a change to the maximum number of virtual machines that can be allocated to the distributed application, *Δmax_VM,* 1238; (5) an indication of a change to the maximum data-storage capacity that can be allocated to the distributed application, *Δmax_storage,* 1240, and (6) an indication of a change to the maximum networking capacity that can be allocated to the distributed application, *Δmax_network,* 1242. The maximum number or capacity of a computational resource that can be allocated to the distributed application may be reserved by the distributed-application controller from an infrastructure provider who manages the distributed computer system on which the distributed application runs, and may involve increasing the numbers of one or more hardware components, in certain cases. The utilizations of different types of allocated computational resources is determined by one or more of virtualization layers, operating systems, and management agents or executables within a distributed computer system in which the distributed application runs and are reported to the distributed-application controller. The utilizations are reported as floating-point numbers in the range [0, 1] or as percentages. The data-storage capacities and network capacities may be indicated in various different units, such as gigabytes and gigabytes/second. The indications to change the maximum allocatable capacity or number of the computational resource are selected from the set {-1, 0, 1} which indicate a decrease, neither a decrease nor an increase, and an increase, respectively.

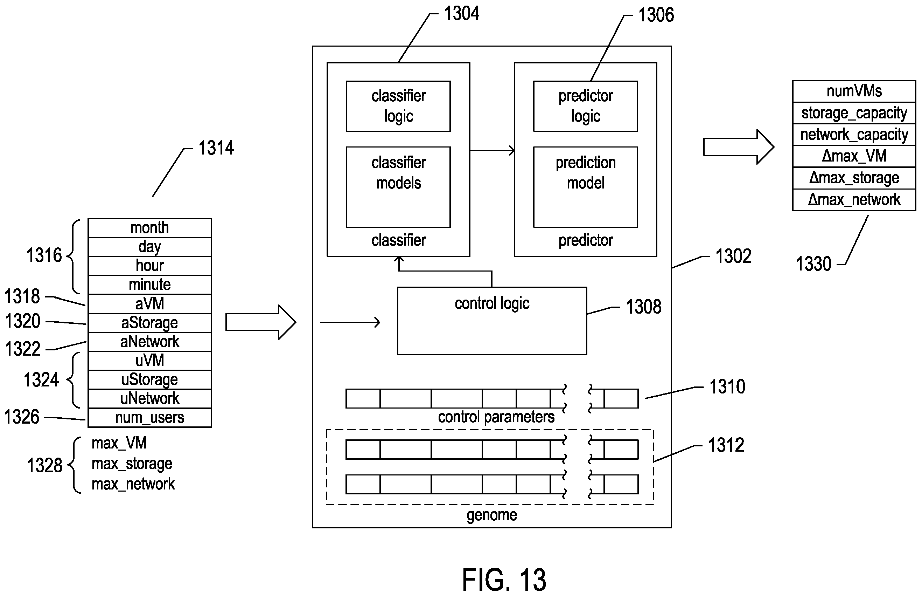

Figure 13 illustrates an artificial-life agent. The agent 1302 includes a classifier 1304, a predictor 1306, control logic 1308, and a set of control parameters 1310, referred to as a "blueprint," that is derived from a genome 1312, as discussed below. In the current example, the internal input vector 1314 input to an agent is derived from the input vector (1202 in Figure 12) input to the population by the controller. The internal input vector includes: (1) indications of the current month, day, hour, and minute, *month, day, hour,* and *minute,* 1316 derived from the date/time indication 1204 in the input vector to the population; (2) the percentage of the maximum number of virtual machines allocatable to the distributed application that have been allocated to the distributed application, *aVM,* 1318; (3) the percentage of the maximum data-storage capacity allocatable to the distributed application that has been allocated to the distributed application, *aStorage,* 1320; (4) the percentage of the maximum networking capacity allocatable to the distributed application that has been allocated to the distributed application, *aNetwork,* 1320; (5) the percentage of the maximum networking capacity allocatable to the distributed application that has been allocated to the distributed application, *aNetwork,* 1322; (6) indications of the utilizations of the three different types of computational resource, *uVM, uStorage,* and *uNetwork,* 1324, identical to the utilizations 1212, 1214, and 1216 in input vector 1202; and (7) the number of current users of the distributed application, *num_users,* 1326, identical to the number of users 1218 reported in the input vector 1202. In addition to the internal input vector 1314, the agent also receives indications of the maximum allocatable number of virtual machines and maximum allocatable storage and networking capacities 1328 included in elements 1218, 1220, and 1222 of the input vector 1202. The allocation indications *aVM, aStorage,* and *aNetwork* are floating-point numbers in the range [0, 1]. The output vector 1330 is the same as output vector 1230 in Figure 12.

The agent receives an internal input vector, which is, in turn, input to the classifier 1304 to determine a class to which the internal input vector belongs. For example, the various different classes recognized by the agent may correspond to different general distributed-application states. The determined class is then input to the predictor which generates the control recommendations contained in the output vector. The classifier generates and maintains a set of classifier models, each represented by a vector of values of the same format as the internal input vector. The predictor includes a set of prediction models, each prediction model corresponding to a classifier model and including elements which indicate estimated rewards obtainable by the agent for predicting various different types of control operations. A pair of agents may mate and produce a child agent which is associated with one of the mating agents for a period of time. Agents that fail to provide useful and accurate control-operation predictions eventually die and are removed from the population.

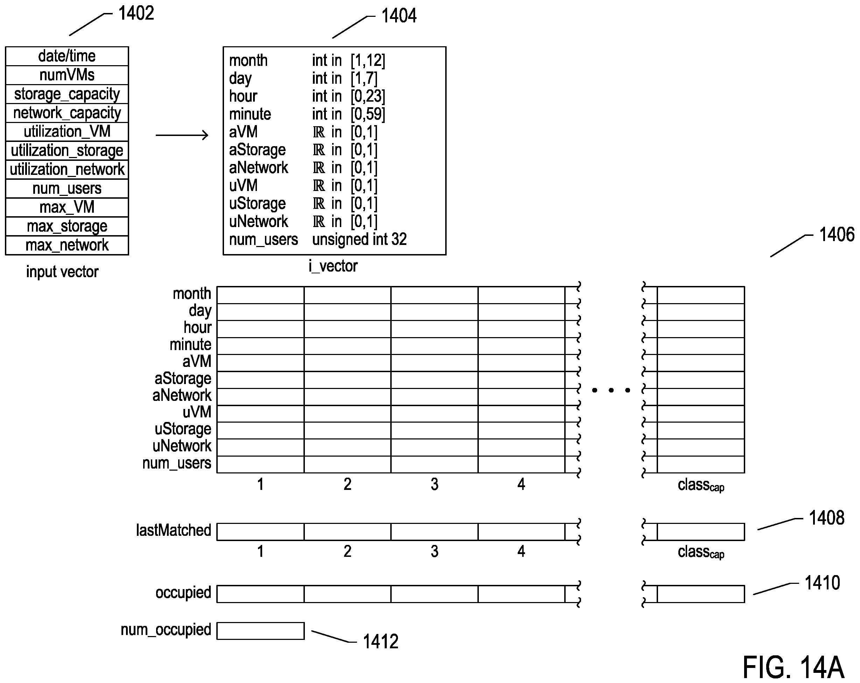

Figures 14A-B illustrate the classifier models and predictor models generated and maintained by each agent. As mentioned above, the input vector input to the population 1402 is transformed into an internal input vector 1404 that is input to each agent. The classifier models 1406 are essentially a set of vectors that each represents a different general state of the distributed application. In the described implementation, the classifier models are indexed by integers in the range [1, *class_{cap}*]*.* An array *lastMatched* 1408 contains timestamps corresponding to each of the classifier models indicating the last time that an input vector was matched to the classifier model. An array *occupied* 1410 contains Boolean values that indicate whether or not each classifier model is valid, or currently used. The variable *num_occupied* 1412 indicates the number of valid, or currently used, classifier models.

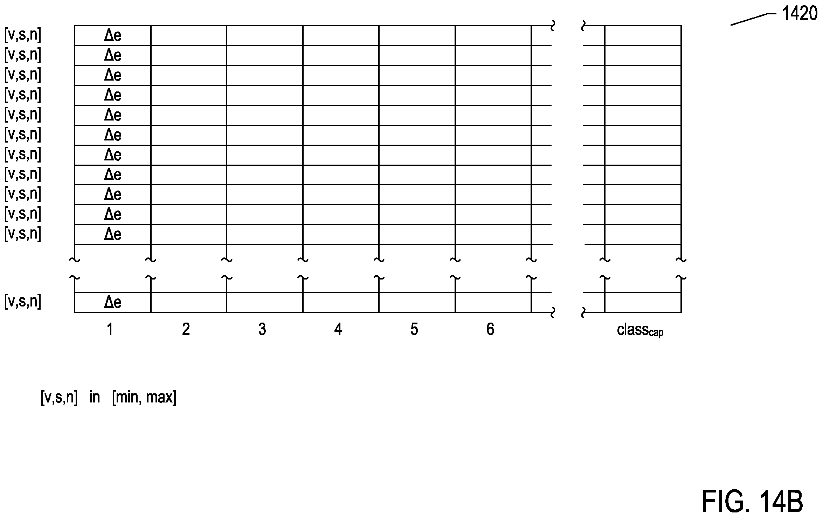

As shown in Figure 14B, the prediction models 1420 are a set of vectors indexed by integers in the range [1, *class_{cap}*]. Each vector contains reward values for each of the different possible control-operation recommendations that can be made by the agent. In the current implementation, the reward values are *Δe* values representing changes to the energy state *e* of the agent. The elements in each prediction model are indexed by action vectors [*v, s*, *n*]. Each element of an action vector can have an integer value selected from the range [-2,2] in this implementation. These values indicate a large decrease, a small decrease, no increase or decrease, a small increase, and a large increase, respectively. The first element in each action vector corresponds to the number of virtual machines allocated to the distributed application, the second element in each action vector corresponds to the data-storage capacity allocated to the distributed application, and the third element in each action vector corresponds to the networking capacity allocated to the distributed application. The possible action vectors, along with the maximum-allocation values, are used to generate the first three elements of an output vector. Thus, an internal input vector is matched, by the agent, to a classification model and the prediction model corresponding to the classification model is then used to generate resource-allocation recommendations. There are many additional methods and techniques for classification and prediction. For example, a neural-network or other type of machine-learning technology may be used for prediction of recommended control operations.

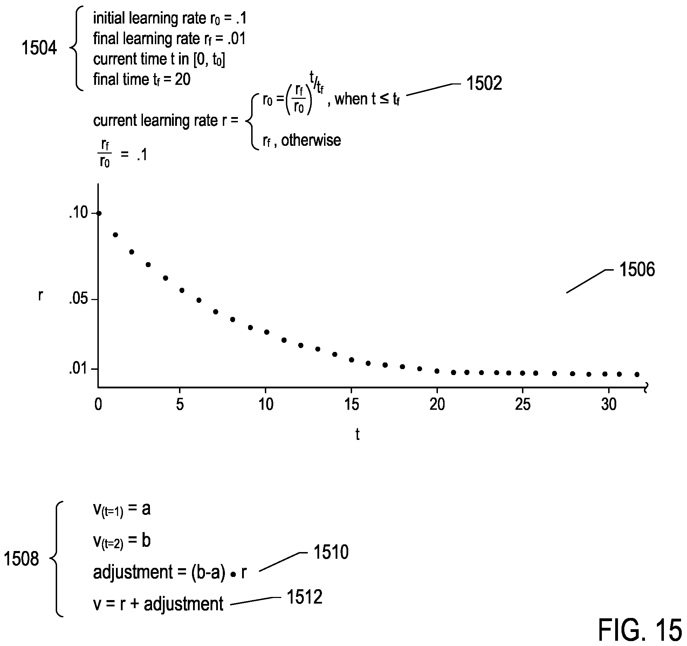

Figure 15 illustrates computation of a learning rate. The agent uses a learning rate for adjusting classification models based on received internal input vectors and also uses a learning rate for adjusting the reward values contained in the prediction models. A number of parameters are used to generate a current learning rate: (1) *r₀,* the initial learning rate; (2) *r_{f},* the final learning rate; and (3) *t_{f},* the final time for learning-rate adjustment. As indicated by expression 1502, the current learning rate r is computed by an exponential factor when the current time *t* is less than or equal to the final time *t_{f},* and when the current time is greater than the final time, the current learning rate is equal to the final learning rate *r_{f}.* In the example shown in Figure 15, example parameter values are indicated in expressions 1504 and the learning rate is plotted with respect to time in plot 1506. Expressions 1508 illustrate use of the learning rate in adjusting a value, such as the value of an element in a classification model or a prediction model. Given two values *a* and *b* for the element v at two different times, an adjustment is computed using the current learning rate, as indicated by expression 1510, and the value of the element *v* is adjusted according to expression 1512. The adjustment is essentially the current learning rate times the difference between the two values and results in a decrease in the element value when *b < a* and an increase in the element value when *b > a,* both proportional to the current learning rate.

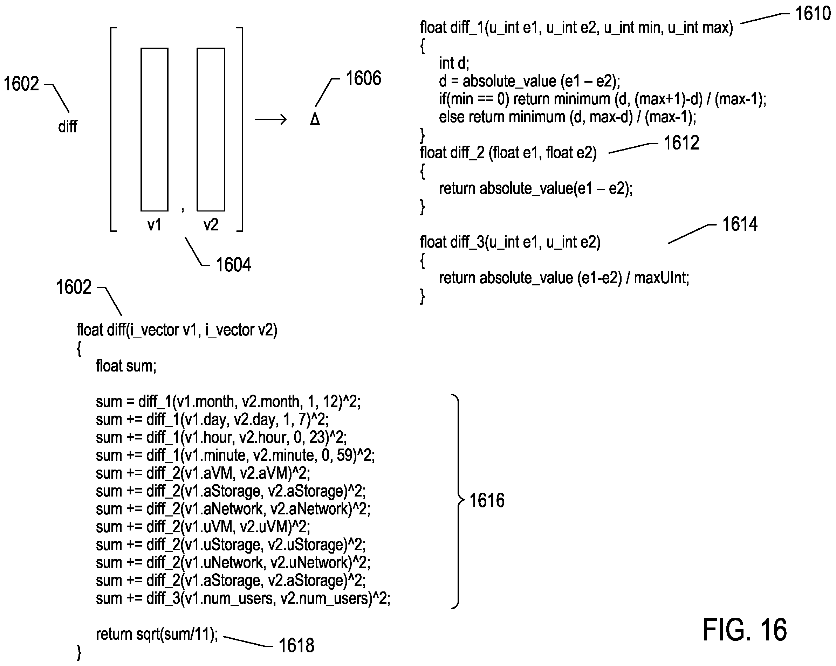

Figure 16 illustrates one possible approach to computing the difference or, equivalently, the similarity, between two classification models. The routine *diff* 1602 shown in Figure 16 receives two classification models as arguments 1604 and produces a floating-point difference 1606 in the range [0, 1]. The difference can be converted to a similarity by subtracting the difference from 1. Three different difference functions *diff_1* 1610, *diff_2* 1612, and *diff_3* 1614 are shown in Figure 16 for computing differences between corresponding elements of the classification models. Difference function *diff_1* is used for elements with unsigned integer values in the range [*min, max*], where *min* is either 0 or 1. Difference function *diff_2* is used for elements with floating-point values in the range [0, 1]. Difference functions *diff_3* is used for elements with unsigned integer values in the range [0, *maxUInt*]. The function *diff* computes the sum of the squares of the differences computed for each pair of corresponding elements 1616 and returns the square root of the computed sum divided by the number of elements 1618. There are, of course, many other possible approaches to computing the difference between two classification models.

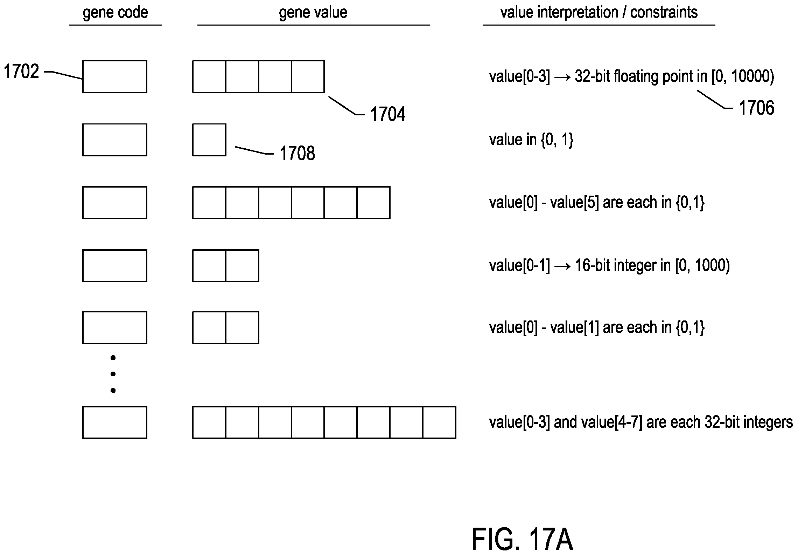

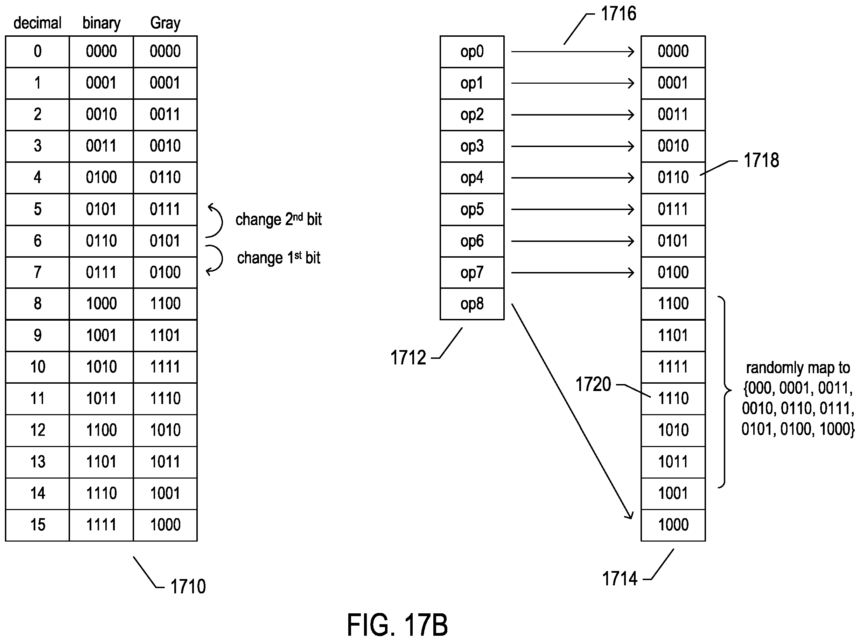

Figures 17A-D illustrate the genes and chromosomes of an agent as well as agent reproduction. Figure 17A shows an example set of genes contained in one of an agent's chromosomes. Each gene comprises a gene code, such as gene code 1702, a gene value, such as gene value 1704, and a set of one or more interpretations and constraints, such as the interpretation and constraint 1706. In this example, each gene code is a 16-bit or two-byte unsigned integer value. The gene values include one or more bytes and may be interpreted in various different ways. For example, gene value 1704 is interpreted as a 32-bit floating-point value and the value is constrained to fall in the range [0, 10000). By contrast, gene value 1708 is interpreted as a Boolean value, in the set {0, 1}. In many implementations, gene values comprise either one or two bytes. In order for gene mutations to produce generally modest changes to gene values, gene values may be encoded using a Gray encoding rather than the typical binary encoding. Table 1710 in Figure 17B shows the decimal, binary, and Gray encodings for the integers in the range [0,15]. In the Gray encoding, changes to the two lowest-significant bit values change the overall value of the encoded integer by +1 or -1. On the righthand side of Figure 17B, an example encoding of nine different values in a 4-bit representation is shown. Each of the nine different values, shown in column 1712, is mapped to a particular, unique 4-bit representation in the column of 4-bit representations 1714, as indicated by arrows, such as arrow 1716. If a mutation occurs in the value of a gene, it is possible that the resulting value will fall outside of the set of 4-bit representations to which the nine values are mapped. For example, if a mutation flips the highest-order bit of representation 1718, the result will be representation 1720, to which none of the nine values 1712 is mapped. This would result in a defective or uninterpretable gene. There are numerous ways to handle such mutations. One way is to simply accept the fact that such mutations result in defective genes. Another approach is to redundantly map each of seven of the nine values to two different representations, so that all possible 4-bit representations correspond to one of the nine values. However, following many lifecycles and corresponding mutation events, those values mapped to a greater number of representations will occur more frequently than those values mapped to a smaller number of representations. A third way to handle such mutations, shown in Figure 17B, is to randomly remap any of the representations not originally mapped to values to one of the values. In this way, all mutations to the representation of a particular value will generate another legitimate value. Different methods for encoding values into digital representations may be used for different genes within an agent's genome.

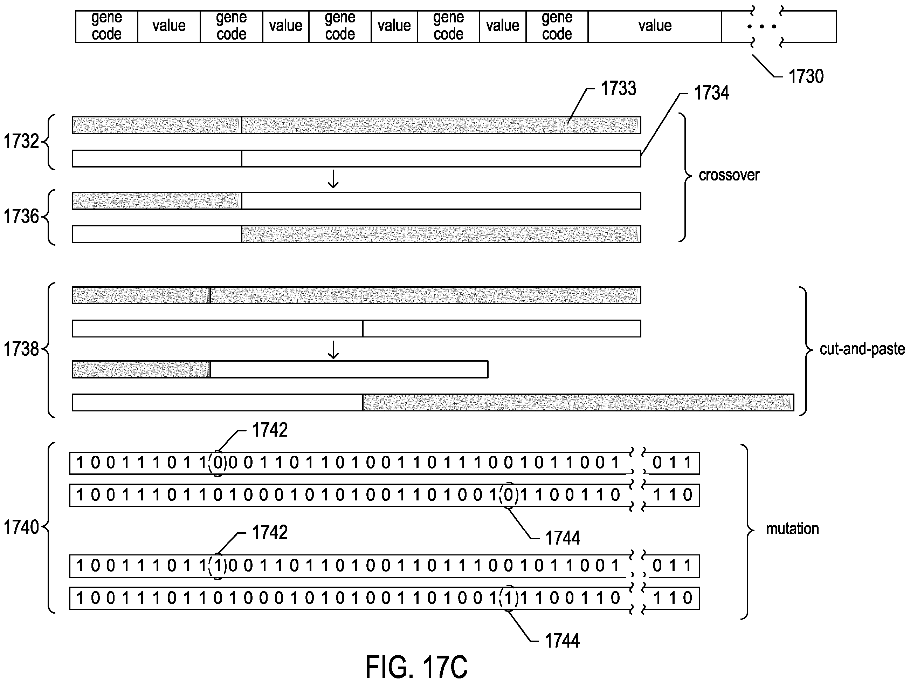

As shown at the top of Figure 17C, a chromosome 1730 consists of a sequence of bytes or other such units of digital storage that encode a sequence of genes, each gene comprising a gene code and a gene value. During reproduction, various types of chromosome-altering events may occur with specified frequencies. During reproduction, as further discussed below, both chromosomes contained in an agent are copied to produce an aligned pair of copied chromosomes, such as the aligned pair of copied chromosomes 1732. A first chromosome of the pair is shaded 1733 and a second chromosome of the pair is unshaded 1734. In a crossover event, the two chromosomes are each broken into two portions, with the breaks aligned, and either the first or the second portions are swapped, as indicated by the resulting chromosome pair 1736. The aligned breaks may occur at any bit position within the digital representation of the chromosome. When the breaks occur within a gene code or gene value, the gene code or gene value may be changed in the resulting pair of chromosomes. A cut-and-paste event, illustrated by the two pairs of chromosomes 1738, is similar to a crossover event except that the two breaks in the two chromosomes are not aligned. Finally, one or more bit mutations may occur, as illustrated in the chromosome pairs 1740. In this example, bits 1742 and 1744 are flipped in the resulting chromosome pair. A bit in the representation of a chromosome has a specified chance of being flipped, or mutated, during agent reproduction. Similarly, any pair of successive bits in the representation of a chromosome has a specified chance of including a break that leads to a crossover or cut-and-paste event. The chromosome-altering events are implemented by flipping bits or swapping sequences of bits between chromosomes. It is through the various chromosome-altering events that agents evolve over time. Agent evolution is one mechanism for adaptation of agents that, in turn, produces more accurate and useful recommendations by agents to the controller. Agent learning embodied in the set of classification and prediction models maintained by the agent is another mechanism that produces accurate and useful recommendations by agents to the controller.

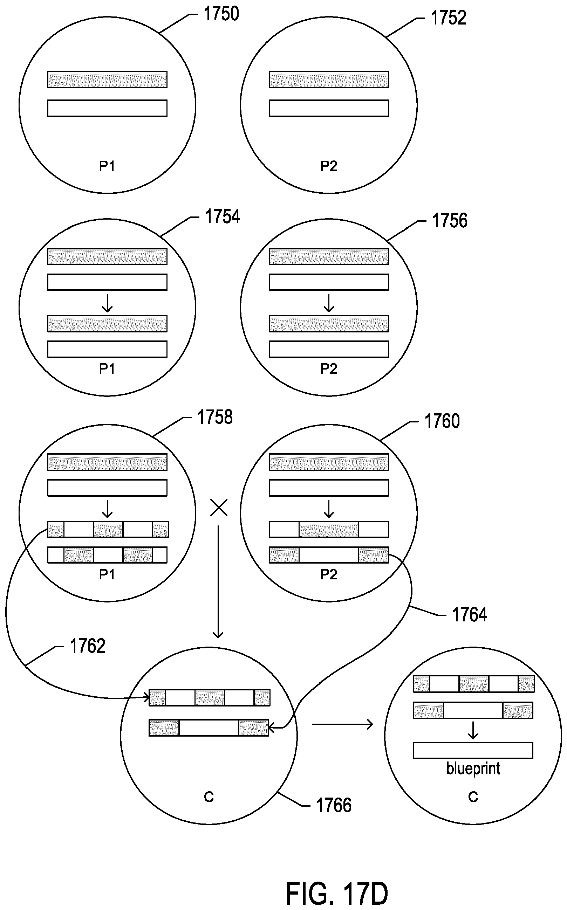

Figure 17D illustrates the agent-reproduction process. At the top of Figure 17D, two agents *P1* and *P2* are represented by discs 1750 and 1752, respectively. Each disk includes a pair of chromosomes representing the agent's genome. The chromosomes start out identical in the initial agents that populate the population. Over time, due to chromosome-altering events, the two chromosomes generally diverge in gene content and gene sequence. When the two agents *P1* and *P2* mate, the chromosomes in each agent are copied to form a duplicate pair of chromosomes, as indicated in agent representations 1754 and 1756. Then, various different chromosome-altering events occur in the duplicate pairs of chromosomes in each agent. The occurrence of chromosome-altering events is probabilistic and controlled by specified chromosome-altering-event frequencies. Agent representations 1758 and 1760 indicate the result of the chromosome-altering events in both duplicate pairs of chromosomes by indicating crossover events using shading. Of course, cut-and-splice events and mutations also occur. Next, as indicated by arrows 1762 and 1764, one chromosome from each duplicate pair of chromosomes is randomly selected for the genome of a child agent 1766. Finally, a blueprint is generated from the two chromosomes inherent by the child agent. The blueprint can be thought of as a single-chromosome genome from which gene values are extracted as control parameters for controlling the operation of agents. The blueprint for a viable agent generally needs to include a gene, including the gene code and gene value, for each different gene present in the initial chromosomes in the initial agents from which the population is created. When only a single copy of a particular gene can be found in the pair of chromosomes, that copy is included in the blueprint. When two or more copies of a particular gene are found in the pair of chromosomes, one of the two or more copies are selected for inclusion in the blueprint. This selection may be carried out, in part, using dominance rules that indicate which of two or more copies to include. As indicated above, genes are generally encoded in such a way that any mutation to the gene produces a different, but valid gene. In those cases in which a portion of a chromosome cannot be interpreted as a valid gene, that portion of the chromosome may be disregarded. Alternatively, as discussed above, random remapping may be employed to generate valid genes from in valid gene encodings. When the blueprint generated from the inherited pair of chromosomes is constructed to include a valid value for each gene, the child agent is viable. Otherwise, the child may be deemed nonviable and the mating between the agents unsuccessful. As with most aspects of the currently disclosed agents and population, there are many different possible ways for implementing genomes and agent reproduction.

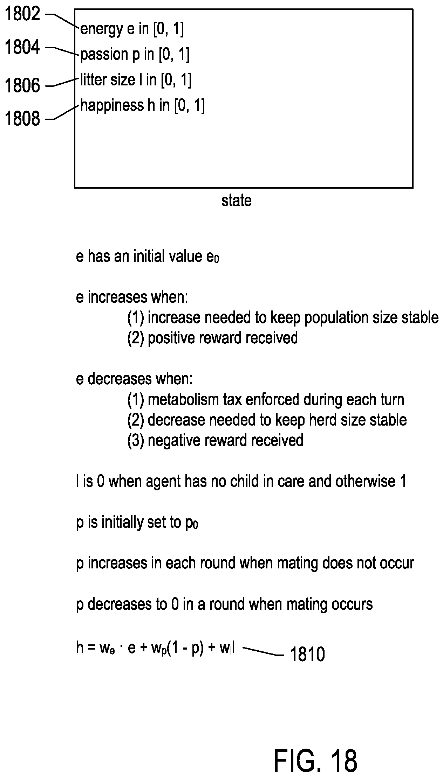

Figure 18 shows the state variables for an agent. The state variables include: (1) *e,* the agent's energy 1802; (2) *p,* the agent's passion 1804; (3) *l*, the agent's litter-size 1806; and (4) *h,* the agent's happiness 1808. The state variables *e, p,* and *h* are floating-point values in the range [0, 1] and the state variable *l* has either the value 0 or the value 1. The agent's energy is reflective of the agent's health and success in recommending control actions. When the population is initially created, each agent has an initial energy value of *e₀.* An agent's energy increases when positive rewards are received or when the population manager adds energy to each agent's energy state in order to maintain a stable population of artificial-life agents. An agent's energy decreases when a metabolism tax is enforced, when negative rewards are received, and when the population-of-artificial-life-agents manager subtracts energy from each agent in order to cull the population. An agent's passion increases from an initial value until the agent successfully mates with another agent, at which point the passion falls back to 0. An agent with the child under care has a litter-size value of 1 and otherwise has a litter-size value of 0. An agent's happiness *h* is a derived value as indicated by expression 1810. The weights *wₑ, wₚ,* and *wₗ* are genetic values and are normalized to ensure that the happiness *h* value falls in the range [0, 1]. Control parameters are genetic when they are specified by gene values in an agent's blueprint.

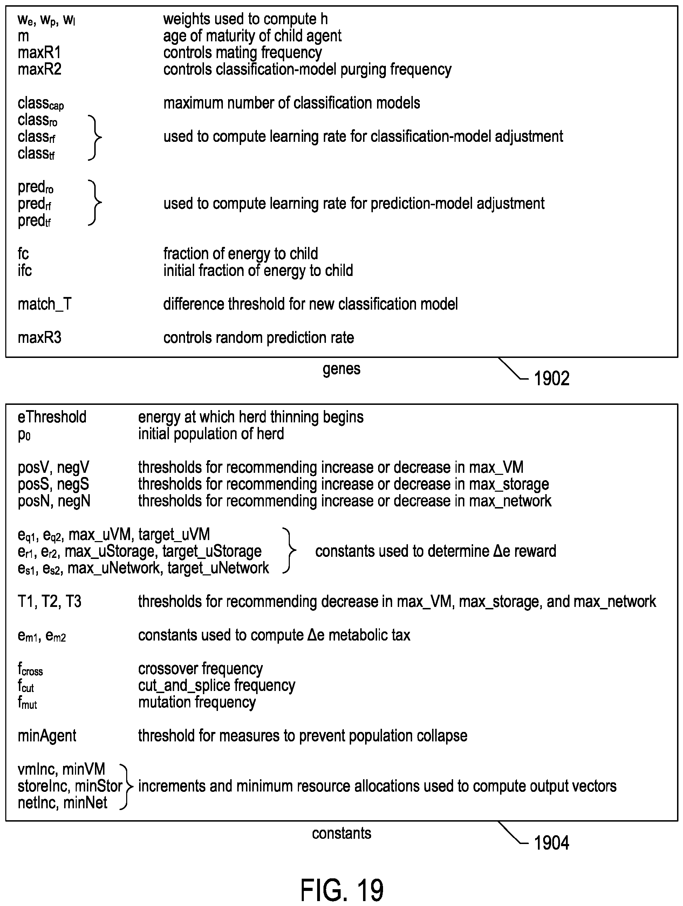

Figure 19 shows a number of control parameters that are encoded as genes within the genomes of agents and a number of constants used by the control logic of agents in the implementation discussed below. Of course, different implementations may use different sets of gene-encoded parameters and different sets of constants. A number of the control parameters are gene encoded, which allows agents to evolve, over time, due to the chromosome-altering events discussed above. The genes and constants are briefly mentioned in the current paragraph and are described, in greater detail, in the following control-flow diagrams that illustrate one implementation of the currently disclosed population of artificial-life agents. The genes listed in Figure 19 1902 include: (1) *w*ₑ, *wₚ*, and *wl*, the above-mentioned weights used in the calculation of an agent's happiness h; (2) *m,* the age of maturity of a child agent which, when reached by the child agent, results in the child agent being weaned from the caring parent and becoming an independent agent; (3) *maxR1*, a value that controls the mating frequency of an agent; (4) *maxR2,* a value that controls the purging frequency of the classification models; (5) *class_{cap}*, the maximum number of classification models that can be stored by the agent; (6) *classᵣ₀*, *class_{rf}*, and *class_{tf}*, the control parameters used to compute the current learning rate for classification-model adjustment; (7) *predᵣ₀*, *pred_{rf}*, and *pred_{tf}*, the control parameters used to compute the current learning rate for prediction-model adjustment; (8)*f_{c}*, the fraction of the energy increment provided to an agent that is provided by the agent to the agent's child, in the case that the agent has a child under care; (9) *if_{c},* the initial fraction of an agent's energy transferred to a newly born child; (10) *match_T*, a difference threshold for potential generation of a new classification model; and (11) *maxR3,* a value that determines the frequency for random action predictions. The constants used by the agents' control logic and by a population-of-artificial-life-agents manager 1904 include: (1) *eThreshold,* an energy threshold at which population thinning is initiated; (2) *p₀*, the initial population size; (3) *posV* and *negV*, thresholds for recommending an increase or decrease in the maximum allocatable number of VMs; (4) *posS* and *negS,* thresholds for recommending an increase or decrease in the maximum allocatable data-storage capacity; (5) *posN* and *negN,* thresholds for recommending an increase or decrease in the maximum allocatable networking capacity; (6) *e_{q1}, e_{q2}, max_uVM, target_uVM, eᵣ₁, eᵣ₂, max_uStorage, target_uStorage, eₛ₁,* and *eₛ₂*, *max_uNetwork* , *target_uNetwork,* constants used to compute Δ*e* rewards for agents; (7) *T1, T2*, and *T3,* thresholds for recommending a decrease or increase in the maximum allocatable computational resources; (8) *eₘ₁* and *e*_{*m*2}, constants used to compute the metabolic tax for an agent; (9)*f_{cross}*, *f_{cut}, fₘᵤₜ,* three constants that specify the frequencies of crossover, cut-and-splice, and mutation chromosome-altering events; (10) *minAgent,* a threshold value for undertaking measures to prevent population collapse; and (11) *vmInc, minVM, storInc, minStor, netInc,* and *minNet,* resource-allocation increments and minimums used to generate an output vector.

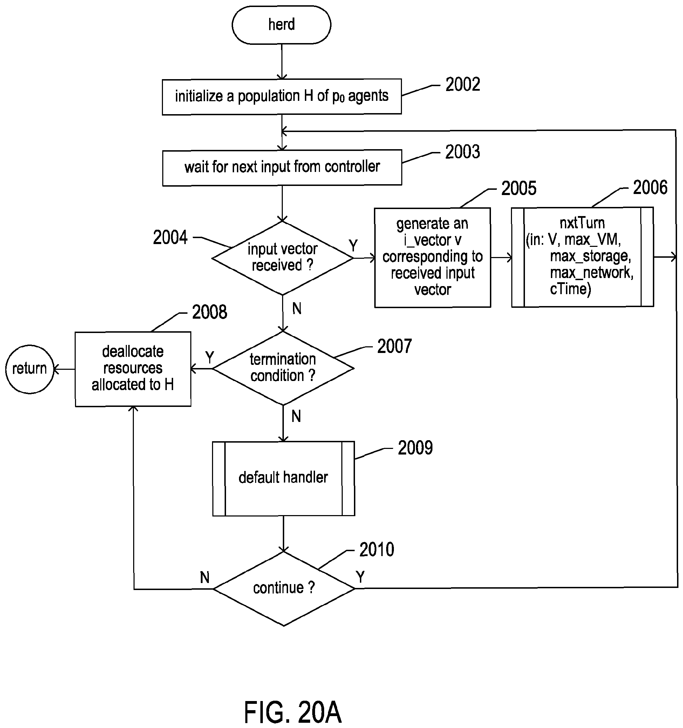

Next, control-flow diagrams are provided to illustrate one implementation of the currently disclosed population of artificial-life agents that is used by a controller to control a distributed application. A distributed application is one example of the various different types of computational entities that may be controlled by controllers that incorporate the currently disclosed population of artificial-life agents. Figures 20A-E provide control-flow diagrams that illustrate implementation of a population-of-artificial-life-agents manager that controls a population of artificial-life agents. The population-of-artificial-life-agents manager may be a separate executable or distributed executable, in certain implementations, or may be largely incorporated into the control logic of individual agents, in other implementations. Figure 20A provides a high-level control-flow diagram for the population-of-artificial-life-agents manager. In step 2002, the population of artificial-life agents is initialized to contain *p₀* agents. Each agent is initialized to include an initial set of chromosomes. A newly initialized agent may contain no initial classification models, in many implementations. However, an alternative implementations, agents may be initialized to contain classification models and prediction models extracted from previously executing agents in order to provide the agents with a head start to learning effective recommendation patterns. In step 2003, the population-of-artificial-life-agents manager waits for a next input from the distributed-application controller. When a next input is received, and the next input is an input vector (1202 in figure 12), as determined in step 2004, the population-of-artificial-life-agents manager generates a corresponding *i_vector,* or internal input vector, v and inputs the internal input vector along with indications of the maximum allowable numbers and capacities of computational resources and the current time to a routine "nxtTurm," in step 2006. The routine "nxtTurm," discussed below, initiates a next turn or round for each agent in the population, as discussed further below. When the next input from the distributed-application controller is a termination indication or condition, as determined in step 2007, the population-of-artificial-life-agents manager deallocates resources allocated to the population, in step 2008, and then terminates. For all additional types of events or inputs, a default handler is called in step 2009. Following the call to the default handler, the population-of-artificial-life-agents manager determines, in step 2010, whether to continue operation. If not, control flows to step 2008. If operation is to continue, control flows back to step 2003.

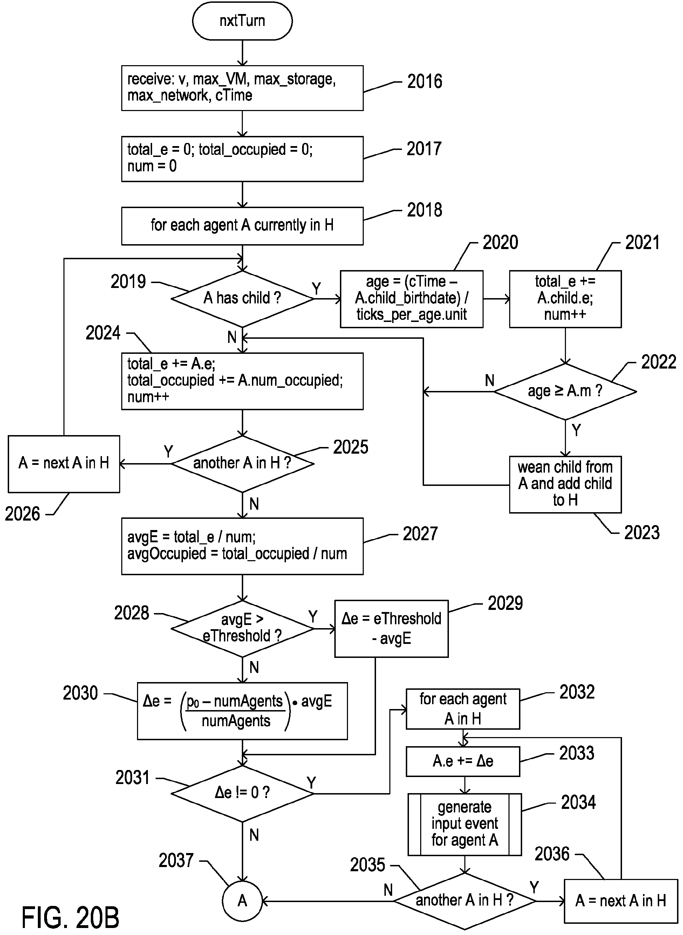

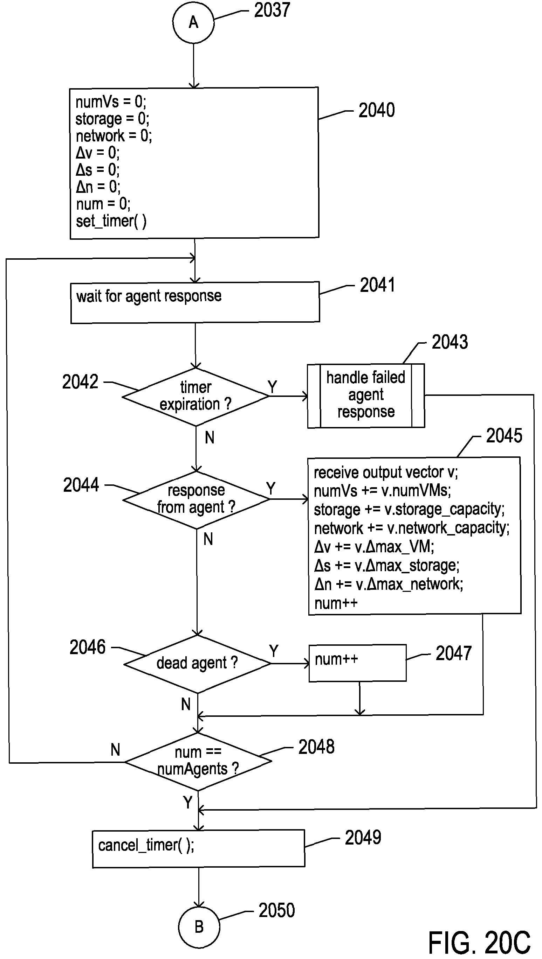

Figures 20B-E provide control-flow diagrams that illustrate implementation of the routine "nxtTurn," called in step 2006 of Figure 20A. In step 2016, the routine "nxtTurn" receives an internal input vector *v,* indications of the maximum allocatable number or capacity of the three different types of computational resources, *max_VM, max_storage,* and *max_network,* and an indication of the current time *cTime,* which is derived by the population-of-artificial-life-agents manager from the *date*/*time* timestamp in the input vector. In step 2017, the routine "nxtTurn" initializes three local variables *total_e, total_occupied,* and *num* to 0. Next, in the *for*-loop of steps 2018-2026, each agent in the population is considered. When the currently considered agent A has a child, as determined in step 2019, the age of the child is computed, in step 2020, the local variable *total_e* is increased by the child's energy, and local variable *num* is incremented, in step 2021, and, when the child's age is greater than or equal to the age of maturity for a child of the currently considered agent *A,* as determined in step 2022, the population-of-artificial-life-agents manager weans the child from the agent and adds the child to the population, in step 2023. However, a child added to the population during execution of the *for*-loop of steps 2018-2026 is not considered as an independent agent during execution of the *for*-loop of steps 2018-2026. In step 2024, local variable *total_e* is incremented by the energy of the currently considered agent A, local variable *total_occupied* is incremented by the number of classification models currently maintained by the currently considered agent *A,* and local variable *num* is incremented. Following completion of the *for-*loop of steps 2018-2026, the average energy *avgE* for the agents in the population is computed and the average number of classification models *avgOccupied* maintained by the agents of the population is computed, in step 2027. When the average energy of the agents is greater than the threshold value *eThreshold,* as determined in step 2028, the local variable *Δe* is set to the difference between *eThreshold* and the average energy of the agents, in step 2029. Thus, *Δe* is set to negative value. Otherwise, in step 2030, the local variable *Δe* is set to the product of the ratio (*p₀* - *numAgents* / *numAgents*) and the computed average energy of the agents. When the current number of agents is greater than that initial agent population, the local variable *Δe* is set to a negative number in step 2030 and when the current number of agents is less than the initial agent population, the local variable *Δe* is set to a positive number in step 2030. When the value stored in local variable *Δe* is not equal to 0, as determined in step 2031, the population-of-artificial-life-agents manager, in the *for*-loop of steps 2032-2036, adds the value stored in local variable *Δe* to the energy of each agent in the population and calls a member routine "input" of each agent to input the internal input vector v to the agent. Control flows to step 2037, at the bottom of Figure 20B, which occurs at the top of Figure 20C and represents continuation of the control-flow diagram of Figure 20B in Figure 20C.

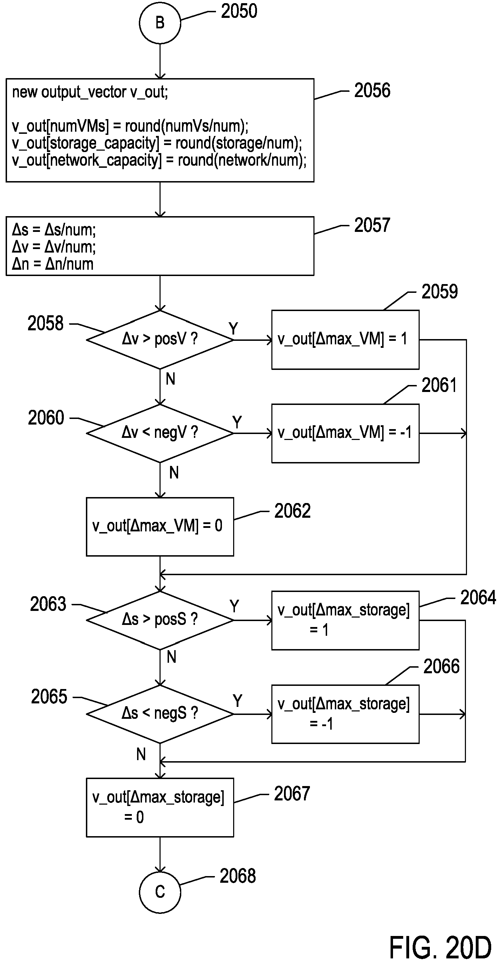

In step 2040, the routine "nxtTurn" initializes local variables *numVs, storage, network, Δv, Δs, Δn,* and *num* to each contain the value 0 and sets a timer. The local variables are used to store the output-vector values returned by each agent to the population-of-artificial-life-agents manager in response to the input events generated in step 2034 of Figure 20B. Then, in step 2041, the routine "nxtTurn" waits to receive responses from the agents in the population. When the next occurring event is a timer expiration, as determined in step 2042, the routine "nxtTurn" calls an error handler, in step 2043, to handle the failure of the population-of-artificial-life-agents manager to receive responses from all of the agents. The error handler may retry generating input events for the agents which failed to respond, retry the entire process of inputting the internal input vector to the agents, or take other types of ameliorative actions. When the next occurring event is the reception of a response from an agent, as determined in step 2044, the routine "nxtTurn" extracts values from the output vector received from the agent and adds the values to the appropriate local variables initialized in step 2040, followed by incrementing the local variable *num.* When the next occurring event is a returned indication from an agent indicating that the agent has died, as determined in step 2046, the local variable *num* is incremented. When the value stored in the local variable *num* is not equal to the number of agents in the population, as determined in step 2048, control returns to step 2041 where the routine "nxtTurn" waits for additional agent responses. Otherwise, in step 2049, the routine "nxtTurn" cancels the timer and control flows to the first step of Figure 20D.

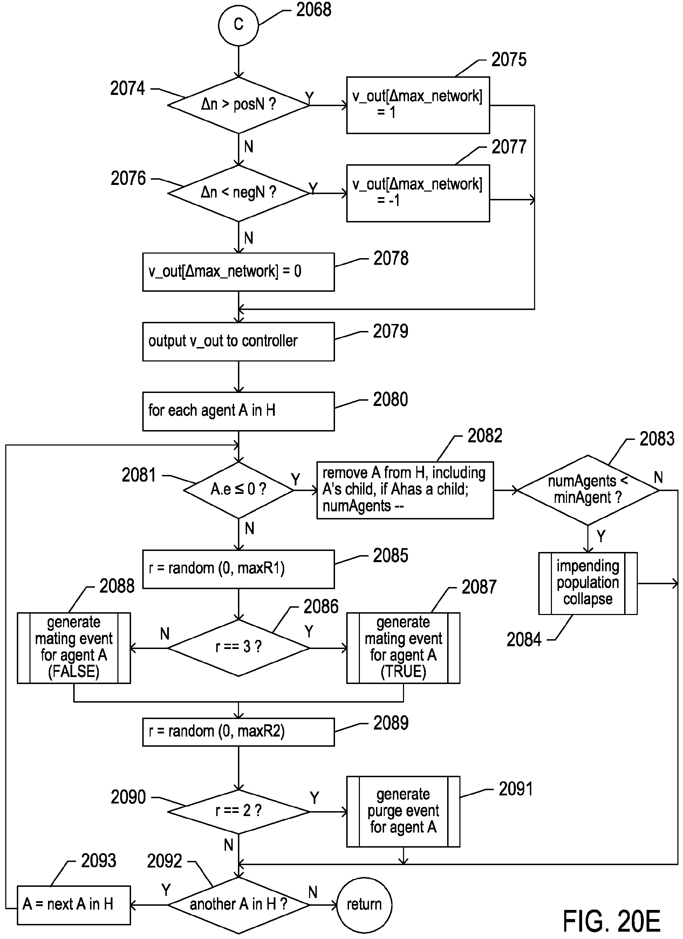

In step 2056, the routine "nxtTurn" create the new output vector *v_out* and stores the averages of the numbers of virtual machines, data-storage capacity, and network capacity recommended by the agents in the population in the first three fields of the output vector. In step 2057, the routine "nxtTurn" averages the recommendations made by the agents to increase, decrease, or leave unchanged the maximum allowable resource numbers and capacities. When the average indication for virtual machines is greater than the threshold value *posV,* as determined in step 2058, the fourth field in the output vector is set to 1 in step 2059. Otherwise, when the average indication for virtual machines is less than the threshold value *negV,* as determined in step 2060, the fourth field of the output vector is set to -1. Otherwise, the fourth field of the output vector is set to 0. Similar logic is used to set the value of the fifth field of the output vector, in steps 2063-2067, and to set the value of the sixth field of the output vector, in steps 2074-2078 at the top of Figure 20E. In step 2079, the routine "nxtTurn" returns the output vector to the distributed-application controller. The distributed-application controller can then consider the recommendations for outputting one or more control commands or operations to the distributed application and/or to the manager of the distributed computer system within which the distributed application runs.

Finally, in the *for*-loop of steps 2080-2093, the routine "nxtTurn" considers each agent A in the population for removal, mating, or purging classification models and prediction models. When an agents energy has decreased to 0 or a negative value, as determined in step 2081, the routine "nxtTurn" removes the agent from the population, in step 2082. When the number of agents is now less than a threshold *minAgent,* as determined in step 2083, a routine "impending population collapse" is called, in step 2084, to address the problem. In step 2085, a random number *r* is a generated and when the random number is equal to 3, as determined in step 2086, the routine "nxtTurn" generates a mating event for the currently considered agent A with a value of TRUE to direct the currently considered agent to mate with another agent. Otherwise, in step 2088, the routine "nxtTurn" generates a mating event for the currently considered agent A with a value of FALSE, directing the agent to increment the agent's passion value. Note that the value *maxR1* essentially specifies a probability of mating on any given turm. In step 2089, a second random number is generated and when the second random number is equal to the arbitrary number 2, the purge event is generated for the currently considered agent, in step 2091, directing the agent to purge one or more classification models. Purging classification models allows an agent to drop infrequently used models in order to learn additional models. Following completion of the *for*-loop of steps 2080-2093, the routine "nxtTurn" returns.

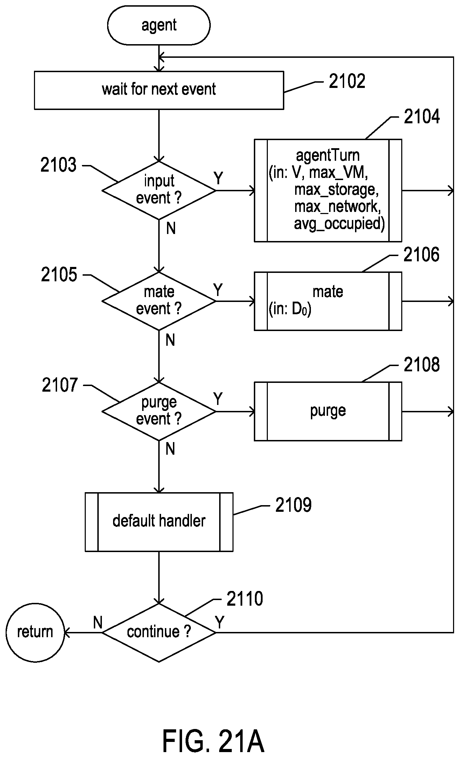

Figures 21A-D provide control-flow diagrams for the routine "agent," which represents the operational logic of each agent in the population. Figure 21A provides a high-level control-flow diagram for the routine "agent." In step 2102, the agent waits for the occurrence of a next event. When the next occurring event is an input event resulting from generation of an input event for the agent in step 2034 of Figure 20B, the routine "agent" calls a routine "agentTurn," in step 2104, which processes the internal input vector transmitted to the agent by the population-of-artificial-life-agents manager in order to provide an output-vector response to the population-of-artificial-life-agents manager, after which control returns to step 2102. The routine "agentTurn" is called with arguments included in the event. When the next event is a mating event, generated in one of steps 2087 and 2088 in Figure 20E, a routine "mate" is called in step 2106, after which control returns to step 2102. The routine "mate" is called with a Boolean argument included in the event. When the next occurring event is a purge event, generated in step 2091 of Figure 20E, a routine "purge" is called in step 2108, after which control returns to step 2102. Other events are handled by a default handler in step 2109. The agent may terminate following execution of the default handler or continue to operate by returning to step 2102.

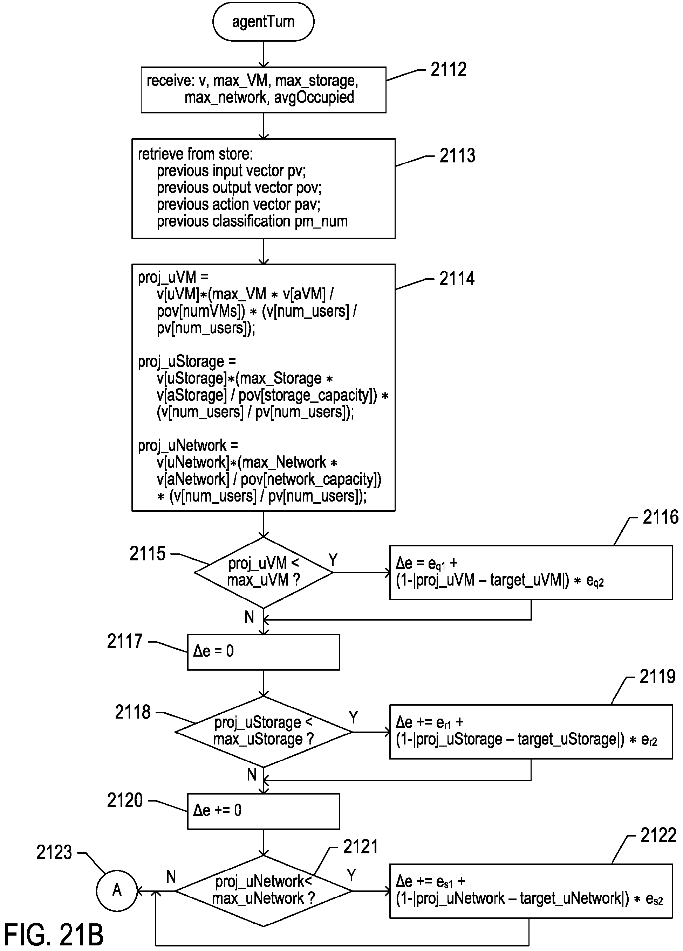

Figures 21B-D provide control-flow diagrams that illustrate implementation of the routine "agentTurn," called in step 2104 of Figure 21A. In step 2112, the routine "agentTurn" receives an internal input vector v, indications of the maximum allowable number of virtual machines that can be allocated, the maximum allowable data-storage capacity that can be allocated, and the maximum allowable network capacity that can be allocated, and the average number of classification models currently maintained by the agents in the population, computed in step 2027 of Figure 20B. In step 2113, the routine "agentTurn" retrieves, from an internal store, the previously processed internal input vector *pv,* the previously output output vector *pov,* the previously generated action vector *pav* used as an index into a prediction model, as discussed below, and the previously generated classification *pm_num.* In step 2114, the routine "agentTurn" computes projections of the current utilizations of virtual machines, data-storage capacity, and network capacity that would have resulted had the agent's previous recommendations been accepted by the controller and used to set the resource allocations for the distributed application in accordance with the agent's previous recommendations. These projected utilizations are stored in local variables *proj_uVM, proj_uStorage,* and *proj_uNetwork.* For example, the determination of the projected virtual-machine utilization *proj_uVM* is made by multiplying the current utilization of virtual machines *v*[*u*VM] by the ratio of the current number of virtual machines allocated to the distributed application, *max_vm * v*[*aVM*] to the previous number of virtual machines allocated to the distributed application *pov*[*numVMs*] and then multiplying the resulting product, which is the projected utilization of virtual machines at the current time had the agents' recommendation been accepted and effected by the distributed-application controller, by the ratio of the number of current users *v*[*num_users*] to the previous number of users to produce the final projected current virtual-machine utilization under current conditions had the agents previous recommendation been affected by the distributed-application controller. Then, in steps 2115-2122, the routine "agentTurn" uses the projected resource allocations to compute the current energy reward Δe for the agent. When the projected resource utilization is less than the maximum desired utilization, the energy reward for the resource is computed in steps 2116, 2119, and 2122. Otherwise, the energy reward for the resource is 0. The energy rewards for the different types of resources in steps 2116, 2119, and 2122 are each computed as the sum of a first constant positive reward component, *e_{q1}, eᵣ₁,* and *eₛ₁*, and a second reward component proportional to how closely the projected resource utilizations corresponds to the target utilizations for the resources.

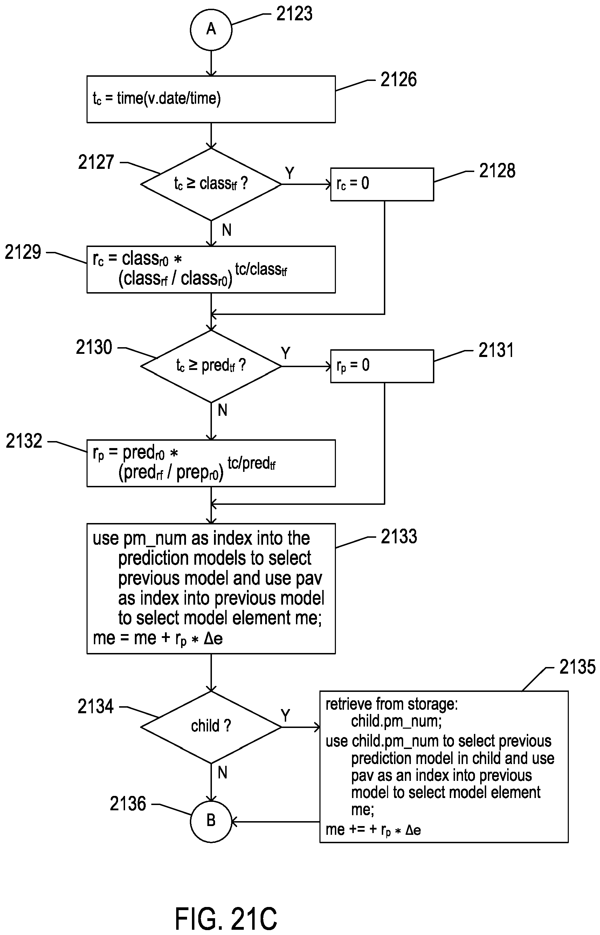

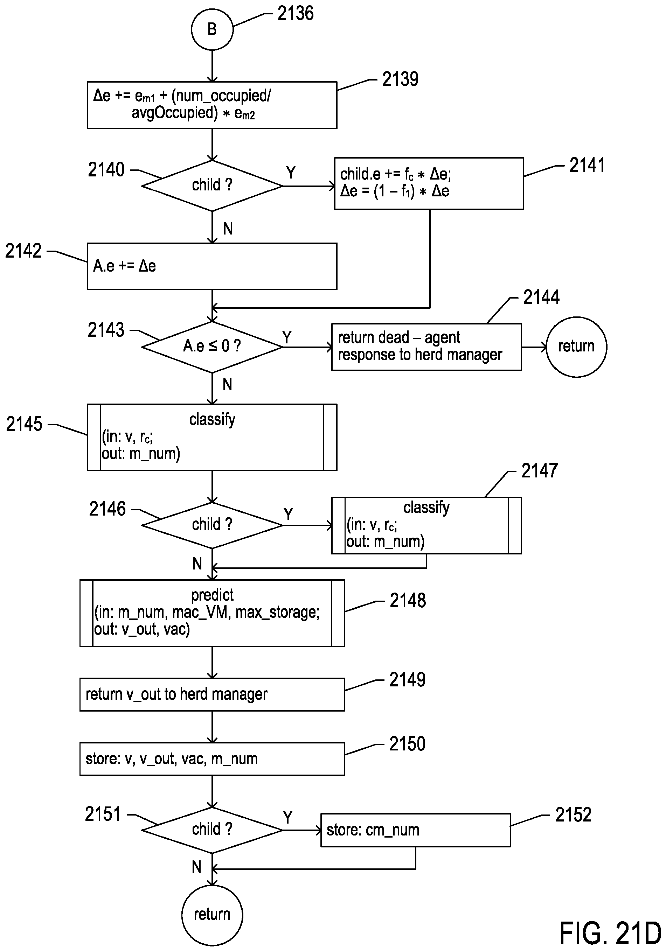

Turning to Figure 21C, the routine "agentTurn," in steps 2126-2129, determines the current learning rate for classification-model adjustment, *r_{c}*, as discussed above with reference to Figure 15. Similarly, in steps 2130-2132, the routine "agentTum" computes the current learning rate, *rₚ*, for prediction-model adjustment. In step 2133, the routine "agentTurn" uses the previously selected classification-model number, *pm_num,* to select the previously used prediction model and uses the previous action vector, *pav,* as an index into the previously used prediction model to select the model element within the previously used prediction model, *me,* used to generate the previous output vector, for adjustment using the current prediction-model-adjustment learning rate and the above-computed reward Δe. When the agent has a child, the child prediction model is similarly adjusted, in step 2135. Turning to Figure 21D, the metabolic tax is computed, in step 2139. When the agent has a child, as determined in step 2140, a fraction of the current reward is added to the child's energy and subtracted from the current reward, in step 2141. In step 2142, the current reward is then added to the energy of the agent. When the agent's energy is now 0 or less than 0, as determined in step 2143, the agent returns a dead-agent response to the population-of-artificial-life-agents manager in step 2144 before the routine "agentTurn" returns. Otherwise, the routine "agentTurn" calls the routine "classify," in step 2145, to classify the current internal input vector. When the agent has a child, as determined in step 2146, the routine "agentTurn" calls the child's member function "classify," in step 2147. In step 2148, the routine "agentTurn" calls a function "predict" to generate an output vector to return to the population-of-artificial-life-agents manager as well as return the action vector, *vac,* used to generate that output vector. In step 2149, the routine "agentTurn" returns the generated output vector to the population-of-artificial-life-agents manager. In step 2150, the routine "agentTurn" stores the current input vector v, the current output vector *v_out,* the current action vector, *vac,* and the currently selected classification-model number *m_num.* When the agent has a child, as determined in step 2151, the classification-model number selected by the child is also stored, in step 2152.

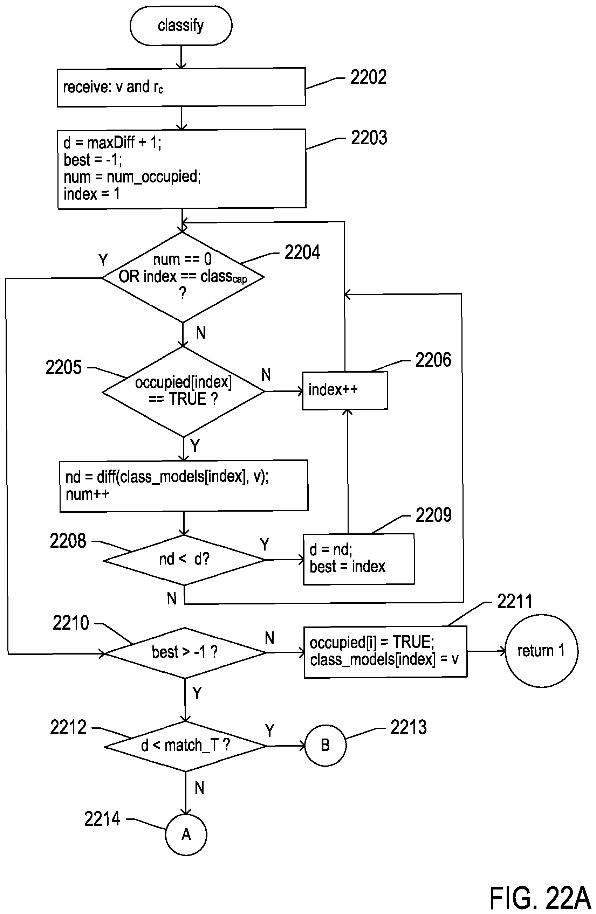

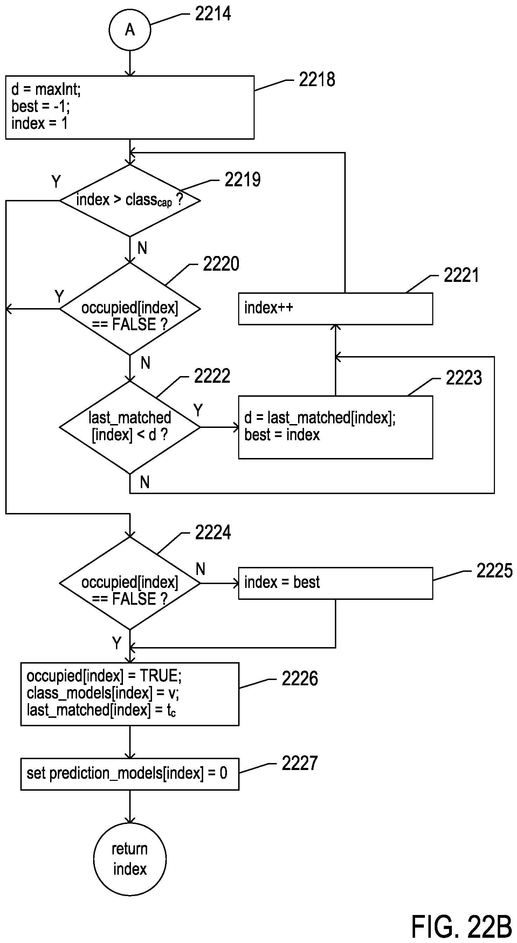

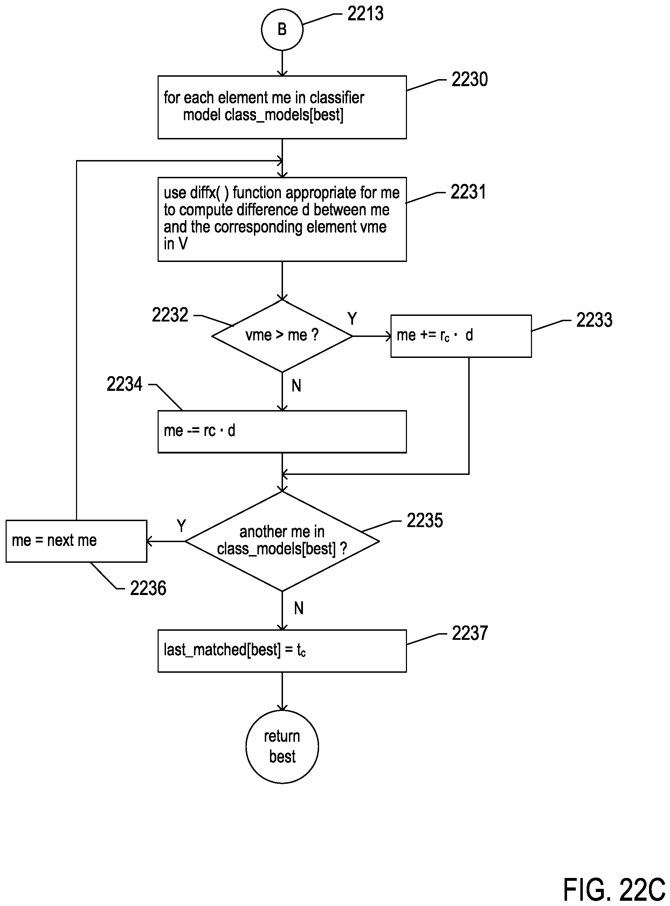

Figures 22A-C provide control-flow diagrams that illustrate implementation of the routine "classify," called in steps 2145 and 2147 of Figure 21D. In step 2202, the routine "classify" receives the current internal input vector *v* and the current classification-model-adjustment learning rate r_{c}. In step 2203, the routine "classify" sets local variable *d* to a large number, local variable *best* to -1, local variable *num* to the current number of classification models, *num_occupied,* and sets local variable *index* to 1. Then, in step 2204, the routine "classify" determines whether *num* stores the value 0 or *index* stores the value class_{cap}. In either case, control flows to step 2210, discussed below. Otherwise, in step 2205, the routine "classify" determines if the classification model indexed by the value stored in local variable *index* is a valid classification model. If not, local variable *index* is incremented, in step 2206, and control returns to step 2204. Otherwise, in step 2207, local variable *nd* is set to the difference between the classification model indexed by local variable *index* and the current internal input vector *v,* as discussed above with reference to Figure 16. When the difference stored in local variable *nd* is less than the value stored in local variable *d,* as determined in step 2208, *d* is set to the contents of local variable *nd* and local variable *best* is set to the value stored in local variable *index,* in step 2209. Thus, the loop of steps 2204-2209 searches for the classification model closest to the current internal input vector *v.* When there is no valid classification model, as determined in step 2210, the current internal input vector is inserted into the classification models as the first classification model, in step 2211, and the index of that model, 1, is returned. Otherwise, when the difference between the current internal input vector and the closest matching classification model is less than a threshold difference *match_T,* as determined in step 2212, control flows to step 2213 in Figure 22C. Otherwise, control flows to step 2214 in Figure 22B.

Turning to Figure 22B, the routine "classify" begins to search for an unused vector in the classification model. In step 2218, local variable *d* is set to 0, local variable *best* is set to -1, and local variable *index* is set to 1. When the value stored in local variable *index* is greater than the maximum index for a classification model, as determined in step 2219, control flows to step 2224, discussed below. Otherwise, when the classification model, or vector, currently indexed by the value stored in local variable *index* is not used, or unoccupied, as determined in step 2220, control flows to step 2224. When the timestamp indicating the last time the classification model indexed by local variable index was matched to an input vector is less than the value stored in local variable *d,* as determined in step 2222, *d* is set to the timestamp of the classification model indexed by local variable *index* and local variable *best* is set to the value stored in local variable *index,* in step 2223, and local variable index is incremented, in step 2221, after which control returns to step 2219. When the currently indexed classification model is used, as determined in step 2224, local variable *index* is set to the value stored in local variable *best,* which is the index of the classification model least recently matched to an input vector and therefore the best candidate for replacement. In step 2226, the current internal input vector is placed into the classification model indexed by local variable index and the timestamp for this new classification model is set to the current time. In step 2227, all of the elements in the prediction model corresponding to the new classification model are set to 0. The routine "classify" returns the index of the new classification model.

Turning to Figure 22C, in the *for*-loop of steps 2230-2236, the routine "classify" adjusts all of the elements in the currently selected classification model, using the current classification-model-adjustment learning rate *r*_{c}, to more closely resemble the current internal input vector. Then, in step 2237, the timestamp for the currently selected classification model is set to the current time, after which the routine "classify" returns the index of the currently selected classification model.

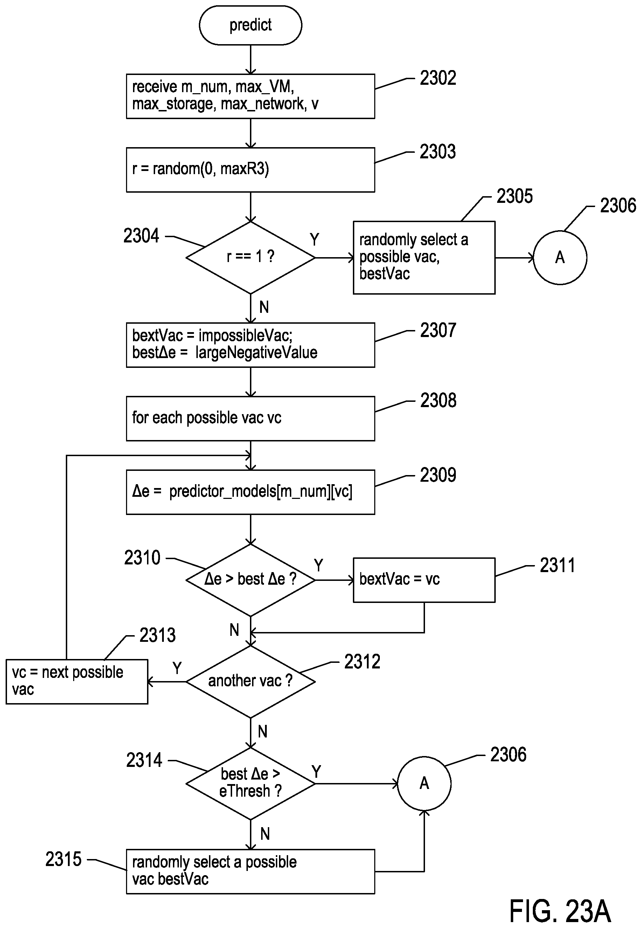

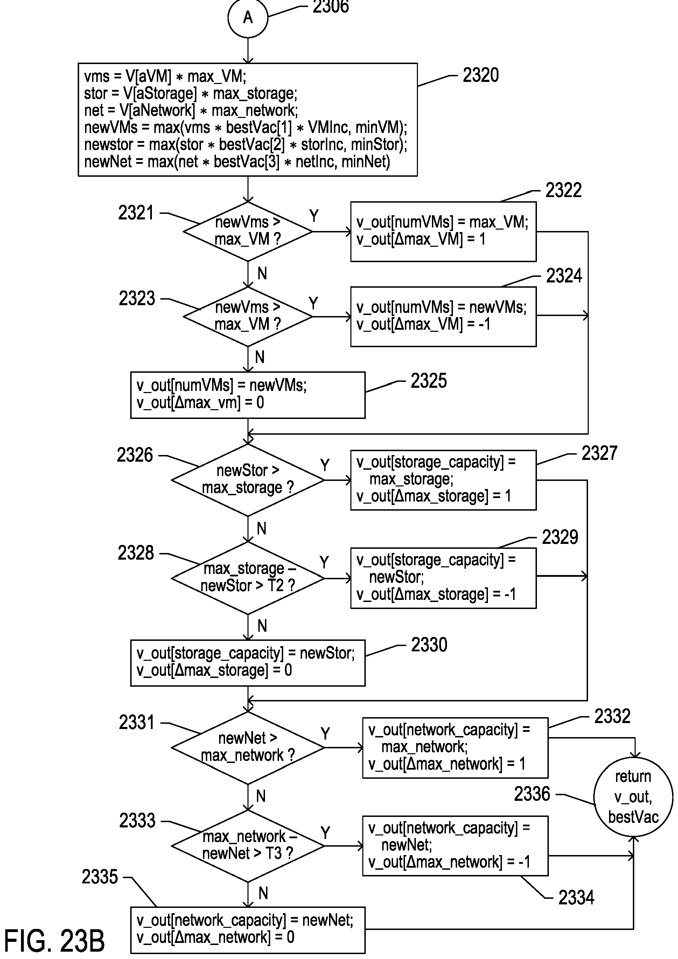

Figures 23A-B provide control-flow diagrams for the routine "predict," called in step 2148 of Figure 21D. In step 2302, the routine "predict" receives the currently selected classification-model number or index, *m_num,* indications of the maximum allowable computational resources, and the current internal input vector *v.* In steps 2303-2305, the routine "predict" uses a generated random number to determine whether or not a probabilistic random selection of an action vector, *bestVac,* should be made for generating an output vector rather than searching for an action vector that would be predicted to return the greatest reward. This is done in order to continue to explore possible actions and adjust to changing conditions. Since the actions recommended by the population-of-artificial-life-agents manager are obtained by averaging agents recommendations, an occasional poor prediction does not generally result in poor recommendations by the population-of-artificial-life-agents manager to the distributed-application controller. Otherwise, beginning with step 2307, an action vector that likely returns the best reward is searched for by the routine "predict." In step 2307, the routine "predict" sets local variable *bestVac* to some impossible value and sets local variable *bestΔe* to a large negative value. Then, in the *for*-loop of steps 2308-2313, the routine "predict" considers all possible action vectors vc and sets *bestVac* to the index of the element containing the best estimated reward in the prediction model corresponding to the currently selected classification model. When the estimated reward stored in *bestΔe* is greater than a threshold value, as determined in step 2314, control flows to step 2306 in Figure 23B. Otherwise, in step 2315, the routine "predict" randomly selects an action vector and stores the selection in local variable *bestVac,* after which control flows to step 2306 in Figure 23B.

In step 2320 of Figure 23B, the routine "predict" computes the new resource allocations placed into the first three elements of the output vector. The current allocation for each resource type is multiplied by the selected action-vector element for the resource type, and the product is multiplied by the resource-allocation increment for the resource type to generate the recommended resource allocation for the resource type. In steps 2321-2325, the routine "predict" selects one of the possible increment indications in {-1, 0, 1} to indicate whether the maximum allocatable number of virtual machines should be decreased, unchanged, or increased. In steps 2326-2325, the routine "predict" makes a similar determination for data-storage capacity and networking capacity. These indications are included in the final three fields of the output vector. The output vector, along with the selected action vector, are then returned in step 2336.

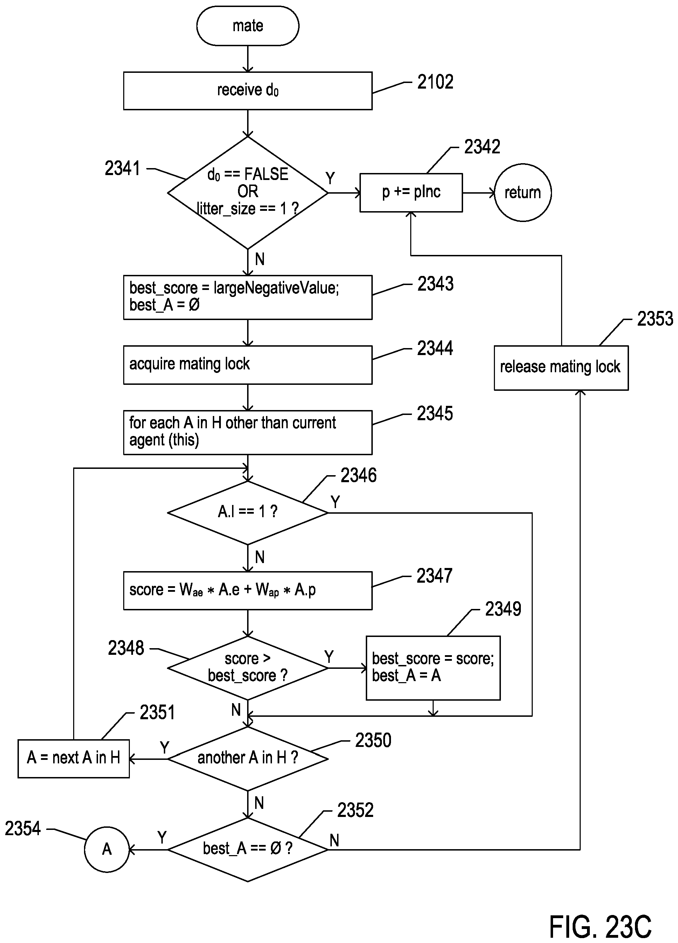

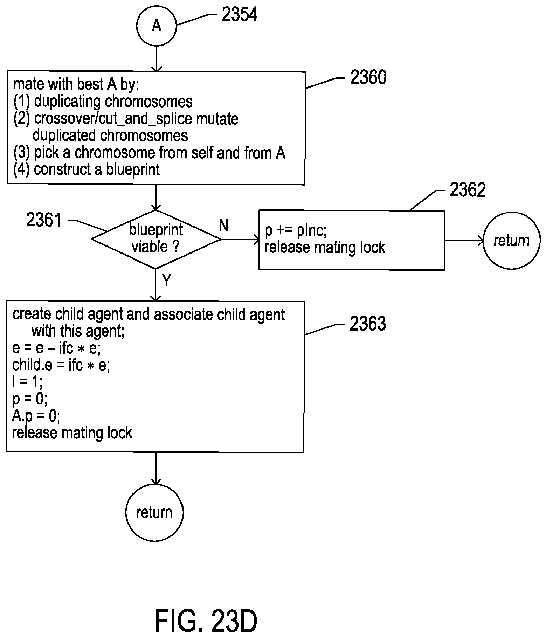

Figures 23C-D provide control-flow diagrams that illustrate an implementation of the routine "mate," called in step 2106 of Figure 21A. In step 2340, the routine "mate" receives a Boolean indication of whether or not the agent should mate with another agent. When the indication is FALSE or when the agent's litter size is equal to 1, as determined in step 2341, the agent's passion is incremented, in step 2342, and the routine "mate" returns. Otherwise, in step 2343, the routine "mate" sets a local variable *best_score* to a large negative value and sets a local variable *best_A* to a null value. In step 2344, the routine "mate" acquires a mating lock. The mating lock is used to prevent race conditions between multiple agents executing the "mate" routine. In the *for*-loop of steps 2345-2351, the routine "mate" searches for the best candidate for mating. When the currently considered candidate agent has a litter - size value of 1, as determined in step 2346, it is unsuitable for mating and control flows to step 2350. Otherwise, the routine "mate" computes a score, in step 2347, for the currently considered candidate agent as the sum of a first product of the candidate agent's energy multiplied by a weighting factor and a second product of the candidate agent's passion multiplied by a weighting factor. When the score for the currently considered candidate agent is greater than the best score so far observed, as determined in step 2348, *best_score* is set to the score for the current candidate agent and *best_A* is set to indicate the currently considered candidate agent. Following completion of the *for*-loop of steps 2345-2351, the routine "mate" determines whether or not a candidate agent for mating has been found, in step 2352. If not, the mating lock is released, in step 2253, and control flows to step 2342 where the agent's passion is incremented before the routine "mate" returns. Otherwise, control flows to step 2360 in Figure 23D. In step 2360, the agent mates with the candidate agent selected in the*for*-loop of steps 2345-2351, as discussed above with reference to Figure 17C-D. When the child agent's blueprint is not viable, as determined in step 2361, no child agent is created but, instead, the mating lock is released and the agents passion is incremented in step 2362 before the routine "mate" completes. Otherwise, in step 2363, a child agent is created and initialized with the blueprint and pair of chromosomes generated in step 2360. The initialization involves initializing the classification models and prediction models of the child agent as for the initial agents of the population, providing a portion of the agent's energy to the child agent, setting the agent's litter size to 1, and setting the child's passion to 0. In addition, the agent's passion is set to 0 and the mating lock is released, following which the routine "mate" returns.

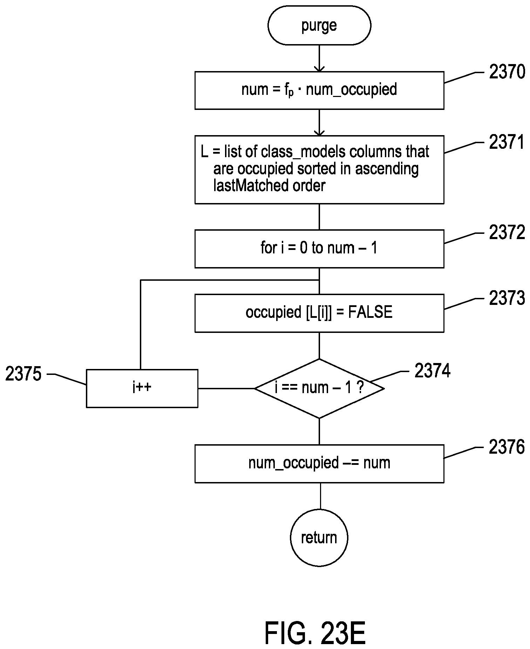

Figure 23E provides a control-flow diagram that illustrates an implementation of the routine "purge," called in step 2108 of Figure 21A. In step 2370, the routine "purge" sets local variable *num* to a fraction of the current number of classification models, the fraction specified by the genetic parameter *fₚ*. In step 2371, the routine "purge" creates a list *L* of the current classification models in ascending last-matched order, using the contents of the l*astMatched* array. Then, in the *for*-loop of steps 2372-2275, *num* classification models are removed by setting the entry for the classification models in the array *occupied* to FALSE. Finally, the number of classification models maintained by the agent is decremented by *num,* in step 2276.

The present invention has been described in terms of particular embodiments, it is not intended that the invention be limited to these embodiments. Modifications within the spirit of the invention will be apparent to those skilled in the art. For example, any of many different implementations of the currently disclosed methods and systems can be obtained by varying various design and implementation parameters, including modular organization, control structures, data structures, hardware, operating system, and virtualization layers, automated orchestration systems, virtualization-aggregation systems, and other such design and implementation parameters. An agent may have multiple pairs of chromosomes, for example, in alternative implementations, and use different genome implementations. The control parameters encoded as gene may vary from implementation to implementation.

In the following further aspects of the invention are defined in the following numbered clauses:
1. A method that improves a distributed-application-or-cloud-infrastructure controller comprising one or more computer systems, each containing one or more processors, one or more memories, and one or more data-storage devices and processor instructions, stored in one or more of the one or more memories that, when and executed by one or more of the one or more processors, control the one or more computer systems to implement the distributed-application-or-cloud-infrastructure controller, the method comprising:
   incorporating a population of artificial-life agents into the distributed-application-or-cloud-infrastructure controller or associating a population of artificial-life agents with the distributed-application-or-cloud-infrastructure controller; and
   controlling, by the distributed-application-or-cloud-infrastructure controller, the distributed application or cloud infrastructure by
      receiving operational-state information from the distributed application or cloud infrastructure controlled by the controller,
      using the received operational-state information to generate input data that the distributed-application-or-cloud-infrastructure controller inputs to a population of artificial-life agents,
      receiving, from the population of artificial-life agents, recommendations for control operations, and
      using the recommendations for control operations to
         determine whether to issue one or more control operations to the distributed application or cloud provider, and
         when issuance of control operations is determined,
            issue one or more control operations to the distributed application or a cloud provider.
2. The method of clause 1,
   wherein the population of artificial-life agents comprises a population-of-artificial-life-agents manager and multiple artificial-life agents, the population-of-artificial-life-agents manager and multiple artificial-life agents each running within one or more execution environments provided by a computer system or a distributed computer system; and
   wherein the population-of-artificial-life-agents manager
      receives input from the distributed-application-or-cloud-infrastructure controller,
      generates internal input data from the received input and inputs the generated input data to the artificial-life agents of the population,
      received output-data responses from the artificial-life agents of the population,
      generates output data from the received output-data responses, and
      outputs the generated output data to the distributed-application-or-cloud-infrastructure controller.
3. The method of clause 1 or 2, wherein
   each artificial-life agent in the population of artificial-life agents comprises:
   a classifier that classifies internal input data by generating a classification that identifies one of a set of classification models maintained by the classifier;
   a predictor that generates output data from a prediction model corresponding to the identified classification model;
   control logic that controls operation of the artificial-life agent, including
      receiving internal input data from a population-of-artificial-life-agents manager,
      invoking the classifier to generate a classification for the internal input data,
      invoking the predictor to generate output data based on the classification, and
      forwarding the generated output data in a response to the population-of-artificial-life-agents manager;
   a blueprint containing control parameters; and
   a genome containing one or more pairs of chromosomes.
4. A physical data-storage device encoded with processor instructions that, when executed by one or more processors within one or more computer systems, each containing one or more processors, one or more memories, and one or more data-storage devices, control the one or more computer systems to implement a distributed-application-or-cloud-infrastructure controller to periodically:
   receive operational-state information from the distributed application or cloud infrastructure controlled by the controller,
   use the received operational-state information to generate input data that the distributed-application-or-cloud-infrastructure controller inputs to a population of artificial-life agents,
   receive, from the population of artificial-life agents, recommendations for control operations, and
   use the recommendations for control operations to
   determine whether to issue one or more control operations to the distributed application or cloud provider, and
   when issuance of control operations is determined,
      issue one or more control operations to the distributed application or a cloud provider.

## Claims

1. A distributed-application-or-cloud-infrastructure controller comprising:
one or more computer systems, each containing one or more processors, one or more memories, and one or more data-storage devices; and
processor instructions, stored in one or more of the one or more memories that, when and executed by one or more of the one or more processors, control the one or more computer systems to implement the distributed-application-or-cloud-infrastructure controller, the distributed-application-or-cloud-infrastructure controller periodically
receiving operational-state information from the distributed application or cloud infrastructure controlled by the distributed-application-or-cloud-infrastructure controller,
using the received operational-state information to generate input data that the distributed-application-or-cloud-infrastructure controller inputs to a population of artificial-life agents,
receiving, from the population of artificial-life agents, recommendations for control operations, and
using the recommendations for control operations to
determine whether to issue one or more control operations to the distributed application or to a cloud provider, and
when issuance of control operations is determined,
issue one or more control operations to the distributed application or a cloud provider.

2. The distributed-application-or-cloud-infrastructure controller of claim 1,
wherein the distributed application or cloud infrastructure controlled by the controller is one of:
a distributed application running in multiple execution environments provided by a distributed computer system;
cloud-infrastructure provided by a cloud-computing facility; and
a distributed application running in cloud-infrastructure provided by a cloud-computing facility.

3. The distributed-application-or-cloud-infrastructure controller of claim 1 or 2, wherein
the population of artificial-life agents comprises a population-of-artificial-life-agents manager and multiple artificial-life agents, the population-of-artificial-life-agents manager and multiple artificial-life agents each running within one or more execution environments provided by a computer system or a distributed computer system.

4. The distributed-application-or-cloud-infrastructure controller of claim 3,
wherein the population-of-artificial-life-agents manager
receives input from the distributed-application-or-cloud-infrastructure controller;
generates internal input data from the received input and inputs the generated input data
to the artificial-life agents of the population;
receives output-data responses from the artificial-life agents of the population;
generates output data from the received output-data responses; and
outputs the generated output data to the distributed-application-or-cloud-infrastructure controller.

5. The distributed-application-or-cloud-infrastructure controller of any one of the claims 1 to 4, wherein
each artificial-life agent in the population of artificial-life agents comprises:
a classifier that classifies internal input data by generating a classification that identifies one of a set of classification models maintained by the classifier;
a predictor that generates output data from a prediction model corresponding to the identified classification model;
control logic that controls operation of the artificial-life agent, including
receiving internal input data from a population-of-artificial-life-agents manager,
invoking the classifier to generate a classification for the internal input data,
invoking the predictor to generate output data based on the classification, and
forwarding the generated output data in a response to the population-of-artificial-life-agents manager;
a blueprint containing control parameters; and
a genome containing one or more pairs of chromosomes.

6. The distributed-application-or-cloud-infrastructure controller of claim 5, wherein
the classifier classifies the internal input data by:
searching for a classification model most similar to the internal input data;
when no classification model with at least a threshold similarity to the internal input data is found,
generating a new classification model from the internal input data;
when the classifier has a capacity for maintaining an additional classification model,
adding the new classification model to the classifier, and
returning a classification identifying the new classification model, and
when the classifier does not have a capacity for maintaining an additional classification model,
replacing a classification model in the classifier with the new classification model; and
when a classification model with at least a threshold similarity to the internal input data is found,
adjusting the found classification model based on the internal input data and a current learning rate for classification-model adjustment, and
returning a classification identifying the found classification model.

7. The distributed-application-or-cloud-infrastructure controller of claim 5 or 6, wherein
the predictor generates output data from a prediction model corresponding to the identified classification model by one of:
randomly selecting one or more actions and encoding the selected actions in the output data as control recommendations; and
selecting a set of actions for which the sum of reward estimates contained in the prediction model is greater than, or equal to, the sum of reward estimates contained in the prediction model for any other set of actions and encoding the selected actions in the output data as control recommendations.

8. The distributed-application-or-cloud-infrastructure controller of any one of the claims 5 to 7, wherein
the artificial agent includes state variables, the state variables including:
*e*, the agent's energy;
*p*, the agent's passion;
*l*, the agent's litter-size; and
*h*, the agent's happiness.

9. The distributed-application-or-cloud-infrastructure controller of any one of the claims 5 to 8, wherein,
when the artificial agent is directed by the population-of-artificial-life-agents manager to mate with another artificial-life agent, the artificial-life agent
searches for a candidate artificial-life agent with which to mate by computing scores for candidate artificial-life agents based on the values of one or more of the candidate artificial-life agents' state variables ; and
when an artificial-life agent with which to mate is found, the artificial-life agent mates with the found artificial-life agent by
generating duplicated genomes for the artificial-life agent and the found artificial-life agent,
probabilistically altering the one or more chromosome pairs in the duplicated genomes,
randomly selecting one chromosome from each pair of chromosomes of the artificial-life agent and the found artificial-life agent to create a new genome for a child agent,
generating a new blueprint from the child agent's genome, and
when the blueprint is viable, creating a child agent that includes the new genome and the new blueprint.

10. The distributed-application-or-cloud-infrastructure controller of any one of the claims 5 to 9, wherein,
when the artificial agent is directed by the population-of-artificial-life-agents manager to purge classification models, the artificial-life agent removes a portion of classification models maintained by the classifier.

11. The distributed-application-or-cloud-infrastructure controller of any one of the claims 5 to 10, wherein
a chromosome includes multiple genes, each gene comprising a gene code that specifies the type of gene and a gene value that specifies the value of a control parameter.

12. The distributed-application-or-cloud-infrastructure controller of claim 11,
wherein the blueprint is generated by, for each possible gene code, selecting a gene with the gene code from the pairs of chromosomes in the agent's genome;
and/or
wherein each pair of chromosomes can be altered by one or more of:
crossover events;
cut_and_splice events; and
single-bit mutations.

13. The distributed-application-or-cloud-infrastructure controller of claim 11 or 12, wherein the genes in the agent's genome include:
genes that include weights used to calculate the agent's happiness h;
a gene that specifies an agent's mating frequency;
a gene that specifies the agent's classification-model-purging frequency;
a gene that specifies the classification-model capacity of the agent's classifier; and
genes that specify determination of learning rates for classification-model adjustment and prediction-model adjustment.

14. The distributed-application-or-cloud-infrastructure controller of any one of the claims 5 to 13, wherein
the internal input data includes one or more of:
an indication of the current number of virtual machines allocated to the distributed application or cloud infrastructure;
an indication of the data-storage capacity allocated to the distributed application or cloud infrastructure;
an indication of the networking capacity allocated to the distributed application or cloud infrastructure;
an indication of the utilization of the current number of virtual machines allocated to the distributed application or cloud infrastructure;
an indication of the utilization of the data-storage capacity allocated to the distributed application or cloud infrastructure;
an indication of the utilization of the networking capacity allocated to the distributed application or cloud infrastructure;
an indication of the current number of users using the distributed application or cloud infrastructure;
an indication of the maximum number of virtual machines that can be allocated to the distributed application or cloud infrastructure;
an indication of the maximum data-storage capacity that can allocated to the distributed application or cloud infrastructure; and
an indication of the maximum networking capacity that can be allocated to the distributed application or cloud infrastructure.

15. The distributed-application-or-cloud-infrastructure controller of any one of the claims 5 to 14, wherein
internal input data includes one or more of:
an indication of the number of virtual machines that should be allocated to the distributed application or cloud infrastructure;
an indication of the data-storage capacity that should be allocated to the distributed application or cloud infrastructure;
an indication of the networking capacity that should be allocated to the distributed application or cloud infrastructure;
an indication of whether the maximum allocatable virtual machines should be increased;
an indication of whether the maximum allocatable data-storage capacity should be increased; and
an indication of whether the maximum allocatable network capacity should be increased.
